(19) Europäisches Patentamt
European Patent Office
Office européen des brevets

(11) Veröffentlichungsnummer: **0 571 398 B1**

(12) **EUROPÄISCHE PATENTSCHRIFT**

(45) Veröffentlichungstag der Patentschrift: **27.09.95**

(51) Int. Cl.[6]: **C08L 71/10**, //(C08L71/10, 79:08,67:03)

(21) Anmeldenummer: **92902107.9**

(22) Anmeldetag: **17.01.92**

(86) Internationale Anmeldenummer: **PCT/EP92/00082**

(87) Internationale Veröffentlichungsnummer: **WO 92/13919 (20.08.92 92/22)**

(54) **TERNÄRE POLYMERLEGIERUNGEN AUF BASIS VON POLYARYLETHERKETONEN MIT EINER GLASTEMPERATUR.**

(30) Priorität: **05.02.91 DE 4103335**

(43) Veröffentlichungstag der Anmeldung: **01.12.93 Patentblatt 93/48**

(45) Bekanntmachung des Hinweises auf die Patenterteilung: **27.09.95 Patentblatt 95/39**

(84) Benannte Vertragsstaaten: **DE**

(56) Entgegenhaltungen:
**EP-A- 0 257 150**
**EP-A- 0 414 124**
**WO-A-85/01509**
**DE-A- 3 836 183**
**DE-A- 3 904 342**
**US-A- 3 953 400**
**US-A- 4 250 279**

(73) Patentinhaber: **HOECHST AKTIENGESELL-SCHAFT**

**D-65926 Frankfurt am Main (DE)**

(72) Erfinder: **FALK, Uwe**
**Am Taubertsberg 4**
**D-6500 Mainz (DE)**
Erfinder: **HERRMANN-SCHÖNHERR, Otto**
**Grafenstrasse 15**
**D-6140 Bensheim 3 (DE)**
Erfinder: **KREUDER, Willi**
**Sertoriusring 13**
**D-6500 Mainz 21 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 571 398 B1

## Beschreibung

Die Erfindung betrifft ternäre Legierungen aus homogen gemischten Polymeren und ihre Verwendung als Matrixmaterialien für Verbundwerkstoffe und zur Herstellung von Formkörpern.

Im Laufe der letzten Jahre wurde eine neue Klasse von Polyarylethern, die Polyaryletherketone, bekannt, deren Synthese durch nukleophile aromatische Substitution erfolgt.

Bei Polyaryletherketonen handelt es sich um eine wertvolle Polymerklasse, die sich u.a. durch hohe thermische Resistenz, hydrolytische Stabilität und gute Lösemittelresistenz auszeichnet. Polyaryletherketone können mit unterschiedlichen Schmelztemperaturen und Molekulargewichten synthetisiert werden, wobei einige Polyaryletherketone eine hohe Kristallinität und Schmelztemperaturen von weit über 300 °C aufweisen.

Es ist bekannt, daß technologisch wichtige Eigenschaften von Polymeren, wie die Glastemperatur und die Schmelzviskosität, eingestellt werden können, indem man Polymere mit anderen Polymeren legiert. Die resultierenden Legierungen können in zwei grundsätzlich unterschiedliche Klassen eingeteilt werden. Die Klasse der nicht homogen gemischten Legierungen ist mehrphasig und zeigt in der Regel mehrere Glastemperaturen. Für die Klasse der einphasigen Legierungen, die in der Regel eine einzige, von der Zusammensetzung abhängige Glastemperatur aufweisen, die zwischen den Glastemperaturen der zur Mischung verwendeten Komponenten liegt, wird im nachfolgenden Text der Begriff homogen gemischt verwendet. Methoden zur experimentellen Bestimmung der homogenen Mischbarkeit sind bekannt (Olabisi, Robeson, Shaw: Polymer-Polymer-Miscibility, Academic Press, New York, S. 321-327, 1979). Weitere Indizien für homogen gemischte Legierungen sind deren Transparenz in der Schmelze und, bei nicht teilkristallinen Polymerlegierungen, im Festkörper.

In der Technik besteht ein besonders großes Interesse an Legierungen aus homogen gemischten Polymeren, da ihre technologischen Eigenschaften durch Variation der Komponenten und der Mischungsverhältnisse bestimmten Anforderungen gezielt angepaßt werden können. Man ist bis heute jedoch weit davon entfernt, die Eigenschaften einer Legierung aus den Eigenschaften der Einzelkomponenten und insbesondere die homogene Mischbarkeit der Komponenten in Legierungen gesichert vorhersagen zu können. Daher bleibt das Legieren von Polymeren weitgehend empirisch.

Aus einer nicht-vorveröffentlichten, prioritätsälteren Patentanmeldung EP-A-0414124 sind homogen mischbare ternäre Legierungen auf Basis von Polyaryletherketonen, Polyarylestern und Polyimiden bekannt, wobei letztere aus Phthalsäureimideinheiten, verbrückt durch aromatische Diole oder divalente Arylreste, aufgebaut sind. Diese ternären Legierungen zeichnen sich durch erhöhte Glastemperaturen und verbesserte Schmelzeviskositäten gegenüber Polyaryletherketonen allein aus.

Es sind bereits Legierungen beschrieben worden aus Polyarylaten mit Polyimiden, die zusätzlich ein thermoplastisches Polymeres enthalten können (US-A-4,250,279). Die Menge dieser dritten thermoplastischen Komponente beträgt lediglich maximal 40 Gewichtsprozent. Als Vorteil dieser Dreier-Mischungen wird angegeben, daß sie ein akzeptierbares Gleichgewicht der mechanischen Eigenschaften aufweisen. Werte für die Kombination mit Polyaryletherketonen als thermoplastischer Komponente, die im Hinblick auf die ternären Legierungen gemäß der Erfindung als Maßstab dienen könnten, sind dieser Patentschrift nicht zu entnehmen.

Weiterhin sind aus (EP-A-0,257,150) binäre homogene mischbare Legierungen aus einem Polyaryletherketon und speziellen Polyimiden bekannt. Durch Zusatz eines Polyaryletherketones wird die Schmelzviskosität des Polyimides erniedrigt.

Die bisher erzielten Glastemperaturen und Schmelzviskositäten sind im Hinblick auf die Verarbeitung der Polymeren Jedoch weiterhin verbesserungsbedürftig.

Aufgabe der vorliegenden Erfindung ist es daher, homogen gemischte Legierungen auf Basis von Polyaryletherketonen und weiteren Polymeren mit erhöhter Glastemperatur und verringerter Schmelzviskosität, insbesondere zur Herstellung von Verbundwerkstoffen, bereitzustellen.

Die Erfindung betrifft eine Legierung aus homogen gemischten Polymeren enthaltend

(a) mindestens ein Polyaryletherketon,
(b) mindestens ein Polyimid und
(c) mindestens einen Polyarylester.

Die Legierung ist dadurch gekennzeichnet, daß sie eine einzige Glastemperatur aufweist, das Polyimid (b) Wiederholeinheiten der Formel

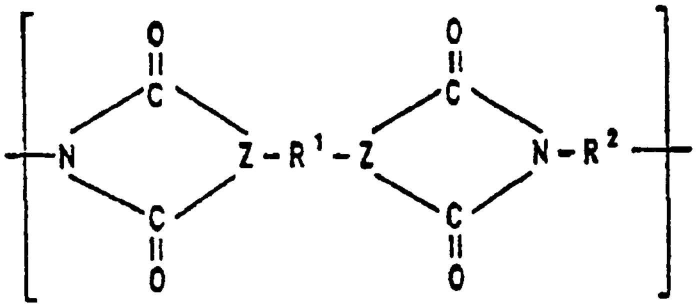

oder der Formel

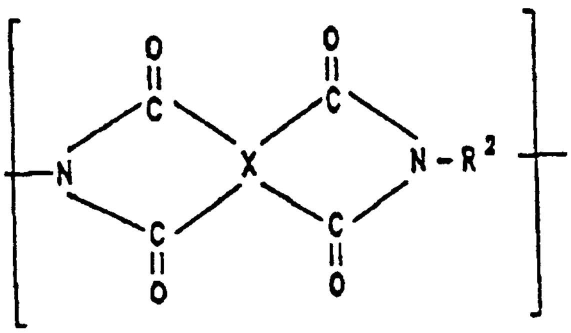

aufweist, wobei $R^1$ für O, S, CO, SO, $SO_2$, Alkylen mit jeweils 1 bis 6 Kohlenstoffatomen, $C(CH_3)_2$, $C(CF_3)_2$, $C(CH_3)(CF_3)$ oder eine direkte Bindung steht, und $R^2$ ein bivalenter Kohlenwasserstoffrest ist, ausgewählt aus

($\alpha$) einem substituierten oder unsubstituierten Rest der folgenden Formeln

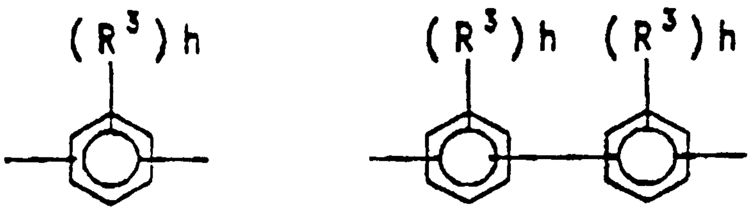

($\beta$) einem Rest der allgemeinen Formel

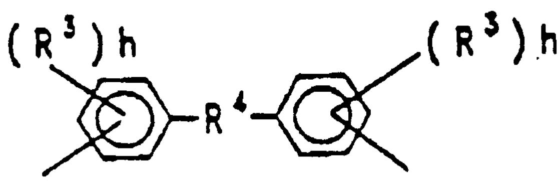

wobei $R^3$ für $C_1$-$C_5$-Alkyl oder Halogen steht, und $R^4$ die Bedeutung hat von O, S, CO, SO, $SO_2$, Alkylen mit 1 bis 9 C-Atomen, Alkyliden mit 1 bis 6 C-Atomen, Cycloalkylen oder Cycloalkyliden mit jeweils 4 bis 9 C-Atomen, und der Index h ganze Zahlen Null, 1, 2, 3 oder 4 bedeutet

oder

(γ) einem Rest der allgemeinen Formel

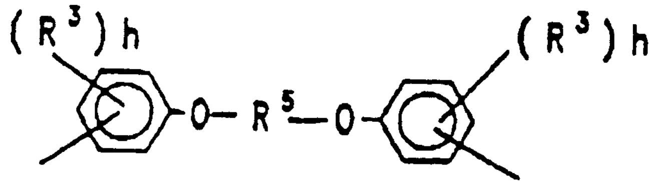

wobei $R^5$ die Bedeutung hat von einem substituierten oder unsubstituierten aromatischen Rest der folgenden Formeln

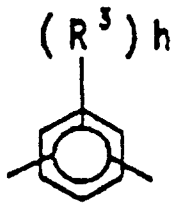

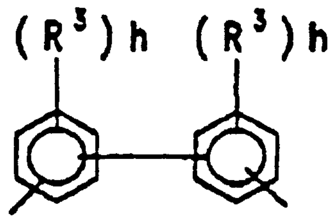

oder einem bivalenten Rest der allgemeinen Formel

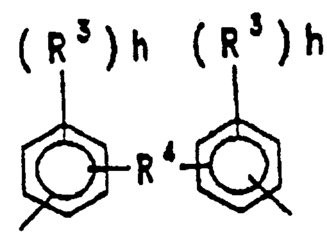

wobei $R^3$, $R^4$ und der Index h die obige Bedeutung haben,
Z für

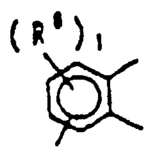

und X für

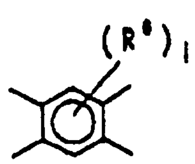

oder

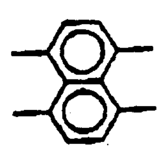

steht,
$R^6$ unabhängig voneinander Alkyl mit 1 bis 6 C-Atomen oder Alkoxy mit 1 bis 6 C-Atomen, bedeutet, der

Index i für ganze Zahlen Null, 1, 2, oder 3, der Index j für ganze Zahlen Null, 1 oder 2 steht, und
der Polyarylester (c) sich ableitet von wenigstens einer Dihydroxyarylverbindung und wenigstens einer aromatischen Dicarbonsäure oder der Polyarylester ein Polyestercarbonat ist, das sich ableitet von wenigstens einer Dihydroxyarylverbindung, einem Kohlensäurederivat und mindestens einer aromatischen Dicarbonsäure,
und der Staudingerindex von (a) 0,2 bis 5,0 dl/g. von (b) 0,1 bis 3,0 dl/g und (c) 0,1 bis 2,0 dl/g und der Anteil der Komponenten (a) 60 bis 95, (b) 2 bis 35 und (c) 2 bis 35 Gewichtsprozent beträgt, jeweils bezogen auf die Gesamtmenge der Komponenten (a), (b) und (c) in der Legierung.

Die einzelnen Komponenten (a), (b) und (c) werden vorzugsweise in folgenden Mengen eingesetzt: Polyaryletherketone (a): 60 bis 95 und insbesondere 75 bis 95 Gewichtsprozent, Polyimide (b): 2 bis 35 und insbesondere 2 bis 20 Gewichtsprozent; Polyarylester (c): 2 bis 35 und insbesondere 2 bis 20 Gewichtsprozent.

Polyaryletherketone (a), die in den Legierungen dar vorliegenden Erfindung eingesetzt werden können, enthalten eine oder mehrere Wiederholeinhalten der folgenden Formeln:

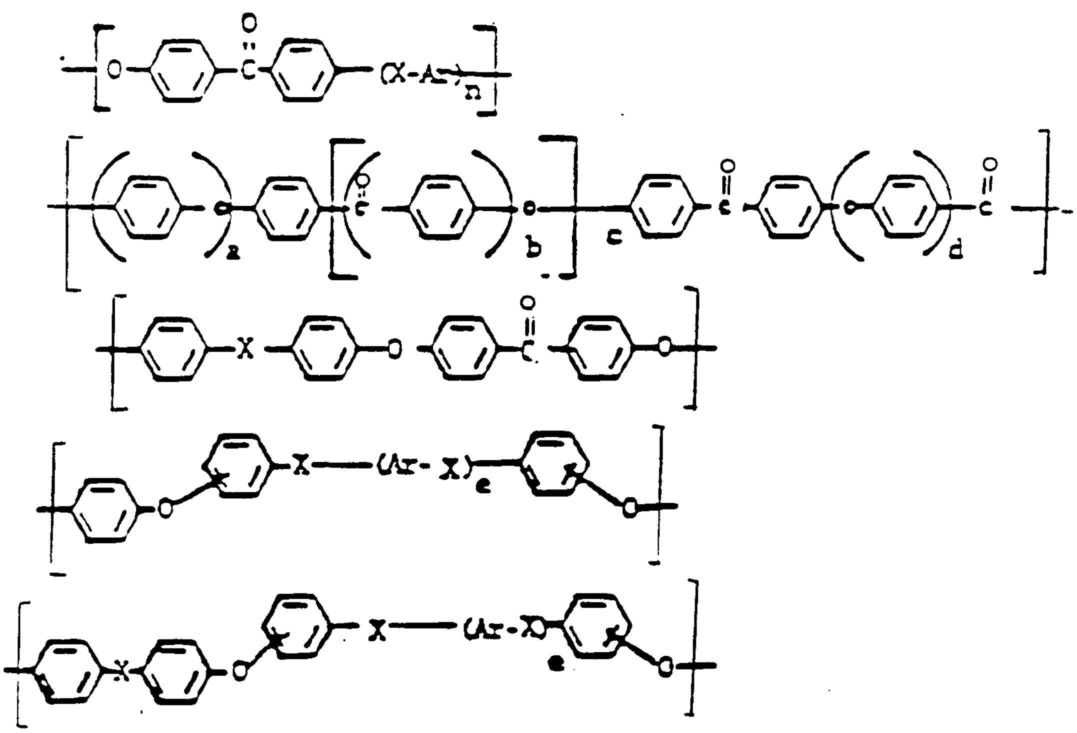

wobei Ar einen zweiwertigen aromatischen Rest darstellt, ausgewählt aus Phenylen, Biphenylen oder Naphthylen, und X unabhängig voneinander für O, CO oder eine direkte Bindung steht, n ist Null oder als ganze Zahl 1, 2 oder 3, b, c, d und e sind Null oder 1, a ist als ganze Zahl 1, 2, 3 oder 4 und d ist bevorzugt Null, falls b gleich 1 ist. Bevorzugte Polyaryletherketone weisen Wiederholeinheiten der folgenden Formeln auf:

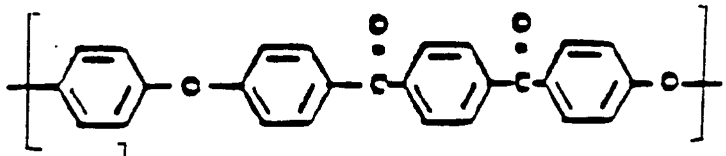

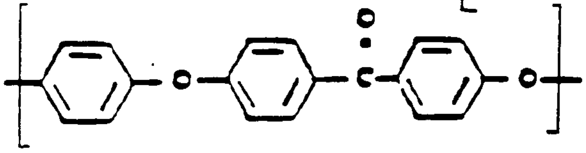

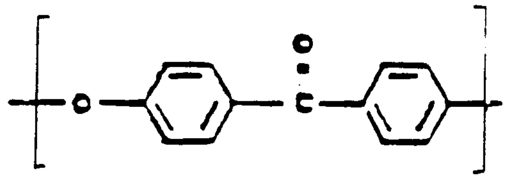

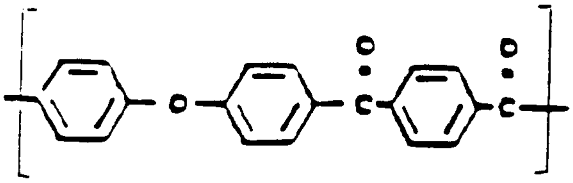

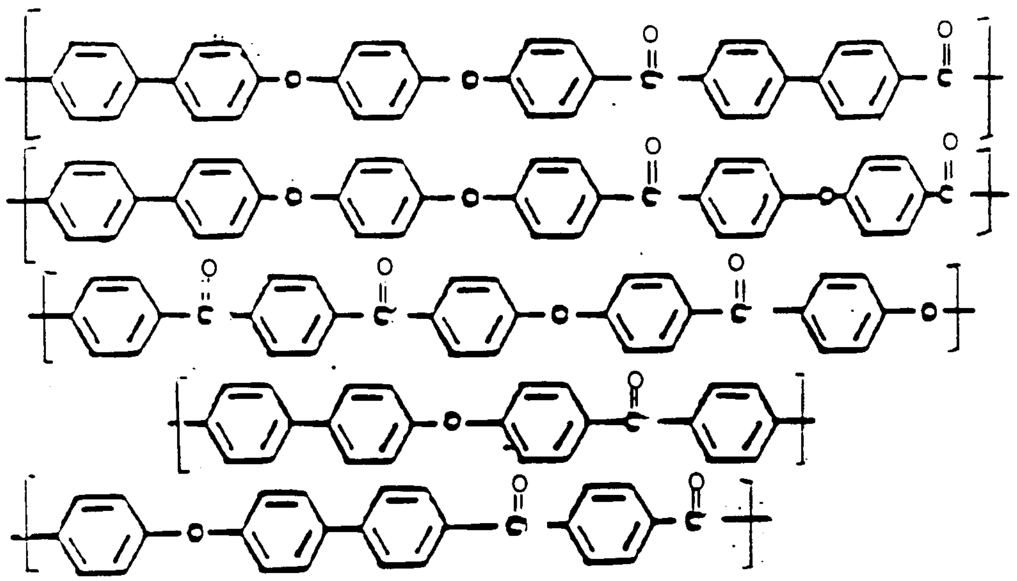

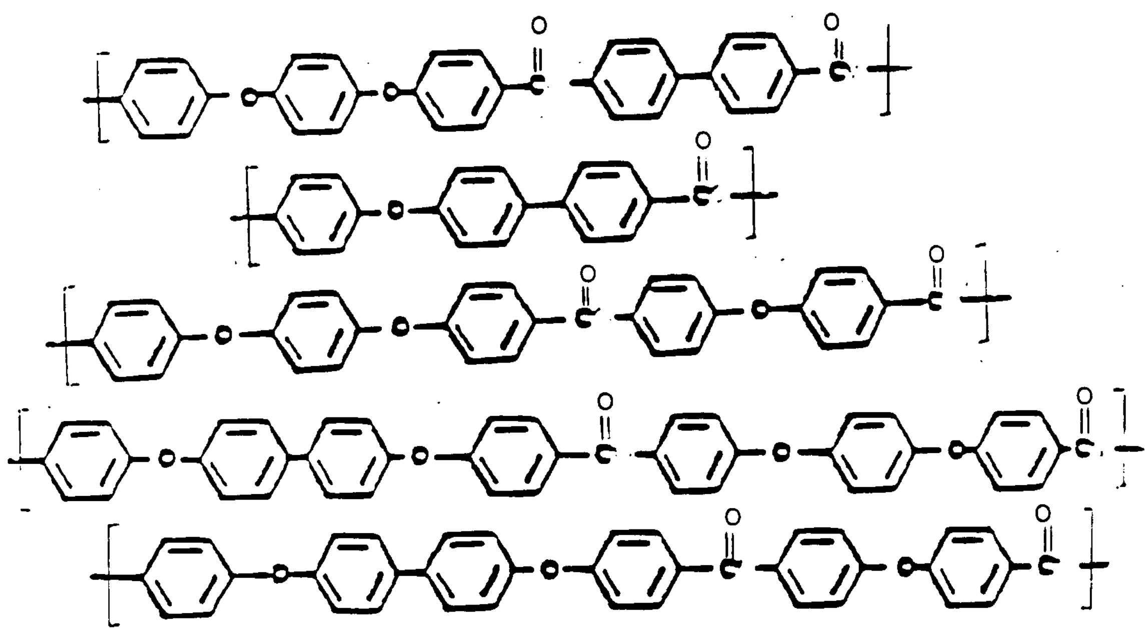

Diese Polyaryletherketone können nach bekannten Methoden synthetisiert werden, die zum Beispiel beschrieben sind in CA-A-847-963; US-A-4,176,222; US-A-3,953,400; US-A-3,441,538; US-A-3,442,857; US-A-3,516,966; US-A-4,396,755 und US-A-4,398,020.

Der Begriff Polyaryletherketone, wie er hier verwendet wird, schließt Homopolymere und Copolymere wie Terpolymere oder Blockcopolymere ein.

Die Polyaryletherketone haben bevorzugt Staudingerindices von 0,5 bis 2,5 dl/g und besondere bevorzugt von 0,7 bis 2,0 dl/g, gemessen in 96 %iger Schwefelsäure bei 25 °C.

Dabel ist $R^1$ (falls Alkylen) beispielsweise Methylen, Propylen oder Butylen, $R^3$ (falls Alkyl) beispielsweise Methyl, Ethyl, die verschiedenen Isomere des Propyls, Butyls, Pentyls oder Hexyls, oder (falls Halogen) beispielsweise Fluor, Chlor oder Brom.

$R^4$ ist (falls Alkylen) beispielsweise Methylen, Ethylen, Propylen oder Butylen oder (falls Alkyliden) beispielsweise Ethyliden, Isopropyliden, Propyliden oder Isobutyliden.

$R^6$ ist (falls Alkyl) beispielsweise Methyl, Ethyl, die verschiedenen Isomere des Propyls, Butyls, Pentyls oder Hexyls oder (falls Alkoxy) beispielsweise Methoxy, Ethoxy oder Butoxy.

Bevorzugte Polyimide der Erfindung sind solche mit folgenden Wiederholeinheiten:

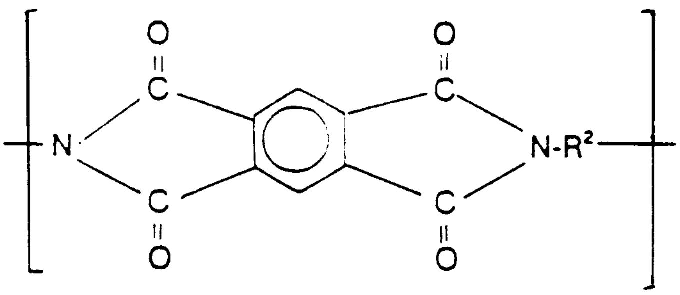

oder

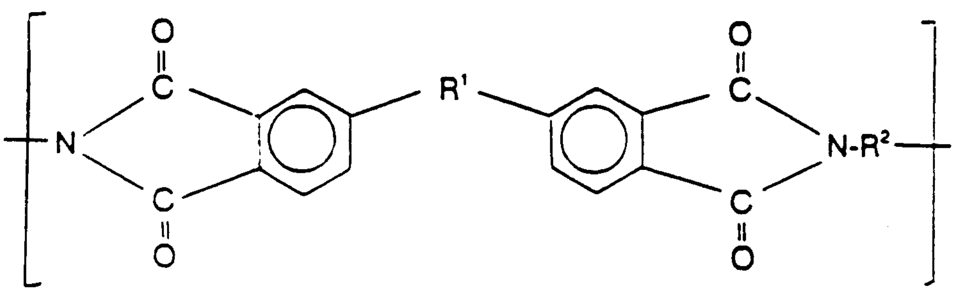

wobei $R^1$ und $R^2$ die obengenannte Bedeutung haben.

Besonders bevorzugte Polyimide der Erfindung sind solche mit folgenden Wiederholeinheiten:

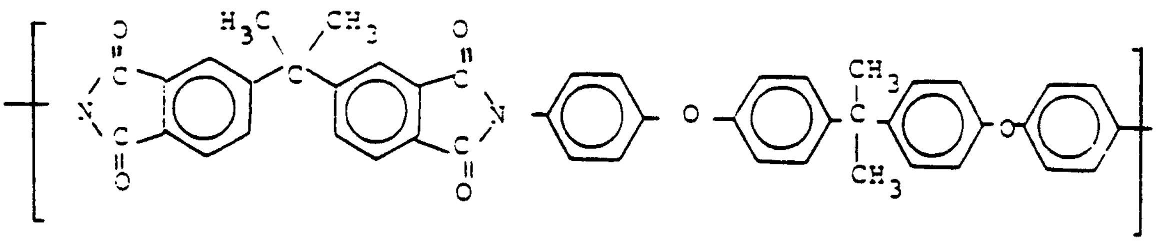

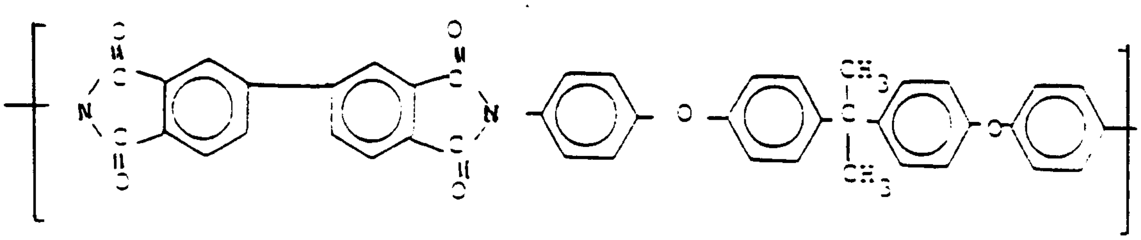

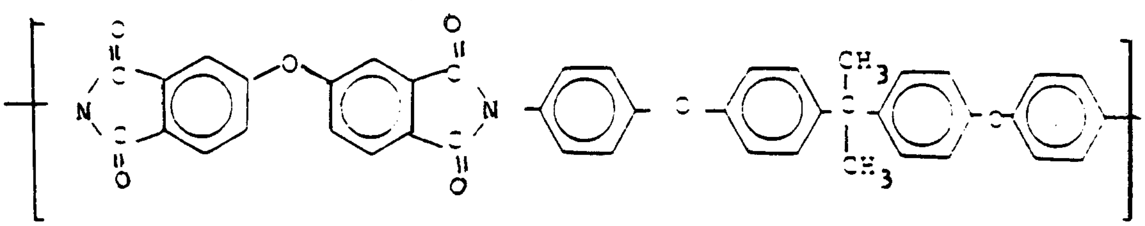

Diese Polyimide können nach bekannten Methoden synthetisiert werden, die zum Beispiel in "Polyimides - Materials, Chemistry and Characterization" (Elsevier, 1989) und in "Polyimides" (Consultants Bureau, 1987) beschrieben sind.

Der Begriff Polyimide, wie er hier verwendet wird, schließt Homopolymere und Copolymere wie Terpolymere oder Blockcopolymere ein. Die verwendeten Polyimide hoben bevorzugt Staudingerindixes von 0,3 bis 1,5 dl/g und insbesondere von 0,3 bis 1,0 dl/g, gemessen bei 25 °C beispielsweise in N-Methylpyrrolidon oder Methylenchlorid.

Die Polyarylester - Komponente c) der erfindungsgemäßen Legierung - können wie oben erwähnt Polyestercarbonate sein, deren Synthesen beispielsweise in den US-Patentschriften 3,030,331; 3,169,121; 4,194,038 und 4,156,069 beschrieben sind. Es handelt sich um Copolyester, enthaltend Carbonatgruppen, Carboxylatgruppen und aromatische Gruppen, wobei wenigstens einige der Carboxylgruppen und wenigstens einige der Carbonatgruppen direkt mit den Ring-Kohlenstoffatomen der aromatischen Gruppen verbunden sind. Diese Polyarylester werden üblicherweise hergestellt durch Reaktion von difunktionellen Carbonsäuren mit Dihydroxyarylenen und Carbonatprecursoren (Kohlensäurederivate).

Als Dihydroxyarylkomponente der Polyestercarbonate werden Verbindungen der allgemeinen Formel

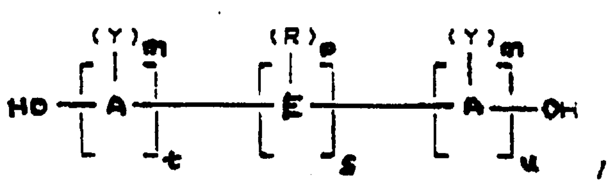

wobei A eine aromatische Gruppe bedeutet, wie Phenylen, Biphenylen oder Naphthylen, und E ausgewählt ist aus Alkylen oder Alkyliden, wie Methylen, Ethylen oder Isopropyliden. R ist ausgewählt aus Wasserstoff, $C_1$-$C_4$-Alkyl, beispielsweise Methyl, Ethyl oder Isopropyl, einer $C_5$-$C_{12}$ Arylgruppe oder einer cycloaliphatischen Gruppe. Y kann die Bedeutung von R haben oder ein Halogen oder eine Nitrogruppe sein. s, t und u sind unabhängig voneinander Null oder 1, wobei die Summe aus s, t und u größer Null ist. m und p sind unabhängig voneinander Null oder eine ganze Zahl, die so groß ist, wie die maximal mögliche Zahl der Substituenten, die A oder E tragen können.

E kann auch aus zwei oder mehreren Alkylen- oder Alkylidengruppen bestehen, verbunden durch eine Nicht-Alkylen- oder Nicht-Alkylidengruppe, beispielsweise einer aromatischen Gruppe, einer tertiären Aminogruppe, einer Carbonylgruppe, einer Sulfidgruppe, einer Sulfoxidgruppe, einer Sulfongruppe oder einer Ethergruppe. Zusätzlich kann E eine cycloaliphatische Gruppe, eine Sulfidgruppe, eine Sulfoxidgruppe, eine Sulfongruppe, eine Etherbindung oder eine Carbonylgruppe sein. Falls t und u Null sind, dann steht E für zwei oder mehrere Alkylen- oder Alkylidengruppen, verbunden durch eine aromatische Gruppe.

Wenn mehrere der mit Y bezeichneten Substituenten vorhanden sind, dann können diese gleich oder verschieden sein. Dasselbe gilt für R. Die Hydroxylgruppen und Y an den aromatischen Resten können para-, meta- oder ortho-verknüpft sein.

Bevorzugte Dihydroxyarylverbindungen zur Herstellung der Polyarylester c) sind solche der Formel

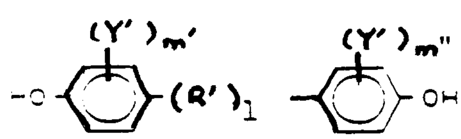

in der Y' Alkyl mit 1 bis 4 Kohlenstoffatomen, wie Methyl, Ethyl oder Isopropyl, Cycloalkyl mit 6 bis 12 Kohlenstoffatomen oder Halogen, vorzugsweise Chlor oder Fluor bedeutet. m" und m' sind unabhängig voneinander Null, 1, 2, 3 oder 4, vorzugsweise Null, und R' ist Alkylen oder Alkyliden mit 1 bis 9, vorzugsweise 1 bis 4 Kohlenstoffatomen wie Methylen, Ethyliden oder Isopropyliden, insbesondere Alkyliden mit 3 Kohlenstoffatomen. Der Index I bedeutet Null oder 1.

Die Dihydroxyarylverbindungen können allein oder als Mischungen mindestens zweier Dihydroxyarylverbindungen verwendet werden.

Als aromatische Dicarbonsäurekomponente der Polyarylester-Komponente c) eignen sich Verbindungen der allgemeinen Formel:

HOOC - R" - COOOH,

wobei R" ausgewählt ist aus den Gruppen

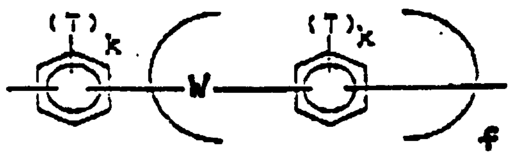

oder

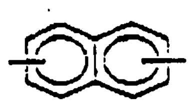

oder

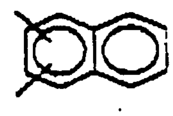

wobei f Null oder 1 ist und W für O, $SO_2$, CO, $C(CH_3)_2$, $CH_2$, S oder

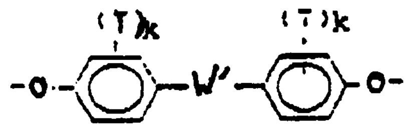

steht, wobei W' für O, $SO_2$, CO, $C(CH_3)_2$, $CH_2$ oder S steht. T ist ausgewählt aus Alkyl mit 1 bis 6 C-Atomen, vorzugsweise Methyl, Propyl oder Butyl, oder Halogen,
vorzugsweise F, Cl, Br. Die Index k bedeutet ganze Zahlen Null, 1, 2, 3 oder 4.

Bevorzugte aromatische Dicarbonsäuren sind Isophthalsäure, Terephthalsäure oder Mischungen dieser beiden. Es können auch bevorzugt reaktive Derivate aromatischer Dicarbonsäuren wie Terephthalsäuredichlorid, Isophthaisäuredichlorid oder Mischungen dieser beiden eingesetzt werden.

Zur Synthese der Polyestercarbonate verwendbare Carbonatprecursoren sind Carbonylhalogenide, beispielsweise Phosgen oder Carbonylbromide und Carbonatester, beispielsweise Diphenylcarbonat.

Die Polyarylester-Komponente c) der erfindungsgemäßen Legierung können auch, wie oben erwähnt, Polyarylester sein, die frei sind von Carbonatgruppen und die abgeleitet sind von wenigstens einer der oben beschriebenen Dihydroxyarylverbindungen und wenigstens einer der oben beschriebenen aromatischen Dicarbonsäuren oder deren reaktiven Derivate, Diese Polyarylester können hergestellt werden durch eine der gut bekannten Polyester bildenden Reaktionen, beispielsweise durch Reaktion von Säurechloriden aromatischer Dicarbonsäuren mit Dihydroxyarylenen oder durch Reaktion von aromatischen Disäuren mit Diesterderivaten von Dihydroxyarylenen oder durch Reaktion von Dihydroxyarylverbindungen mit aromatischen Dicarbonsäuren und Diarylcarbonaten. Solche Reaktionen sind beispielsweise in US-A-3,317,464; US-A-3,395,119; US-A-3,948,856; US-A-3,780,148; US-A-3,824,213 oder US-A-3,133,898 beschrieben. Polyestercarbonate und carbonatfreie Polyarylester können nebeneinander vorliegen.

Die Polyarylester sind bekanntermaßen thermisch weniger belastbar als die übrigen Komponenten der Legierungen gemäß der Erfindung. Daher sind niedrige Gewichtsantelle an Polyarylestern bei denjenigen Legierungen zu bevorzugen, die Polyaryletherketone mit besonders hohen Schmelzpunkten, zum Beispiel ein Keton mit den folgenden Wiederholungseinheiten

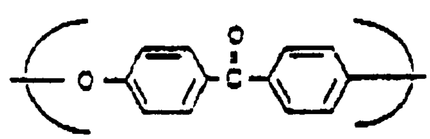

enthalten.

Da jedoch die oben beschriebenen Polyestercarbonate thermisch belastbarer als die übrigen Polyarylester sind, die im vorliegenden Text beschrieben sind, werden diese Polyestercarbonate als bevorzugte Polyarylester c) mit den zuvorgenannten Polyaryletherketonen mit besonders hohen Schmelzpunkten für die Herstellung einer Legierung gemäß der Erfindung eingesetzt.

Die verwendeten Polyarylester bzw. Polyestercarbonate besitzen vorzugsweise Staudingerindices von 0,3 bis 1,5 dl/g und insbesondere von 0,3 bis 1,0 dl/g, gemessen bei 25 °C in p-Chlorphenol, Methylenchlorid oder N-Methylpyrrolidon.

Der Begriff Polyarylester, wie er hier verwendet wird, schließt Homopolymere und Copolymere, wie Terpolymere oder Blockcopolymere, ein.

Die homogene Mischbarkeit der Komponenten in den Legierungen gemäß der Erfindung wurde unter Verwendung mehrerer der zuvor beschriebenen Methoden nachgewiesen.

Beispielsweise zeigen die Legierungen gemaß der Erfindung eine einzige differentialkalorimetrisch nachweisbare Glastemperatur, sie weisen außerdem transparente Schmelzen auf.

Die Legierungen gemäß der Erfindung werden durch bekannte Legierungsmethoden hergestellt. Beispielsweise werden die Legierungspartner in Form von Pulver oder Granulat gemeinsam in einem Extruder zu Strängen extrudiert und die Stränge zu Granulat zerhackt und dieses in die gewünschte Form beispielsweise durch Pressen oder Spritzgießen gebracht.

Die Legierungen können Additive enthalten, beispielsweise Weichmacher, thermische Stabilisatoren, UV-Stabilisatoren, Schlagzähmodifizierer oder verstärkende Zusätze, wie Glas-, Kohle- oder Hochmodulfasern, beispielsweise Polyaramidfasern.

Die Legierungen können insbesondere vorteilhaft als Matrixmaterialien für Verbundwerkstoffe eingesetzt werden, da sie sowohl eine hohe Glastemperatur als auch eine gute Fließfähigkeit aufweisen. Insbesondere Composites aus den erfindungsgemäßen Legierungen mit Glasfasern oder Kohlefasern sind mechanisch stabil und gasblasenfrei herstellbar. Sie eignen sich ferner zur Herstellung von Formkörpern nach dem Spritzguß- oder Extrusionsverfahren, beispielsweise in Form von Fasern, Folien und Schläuchen.

Die Erfindung wird durch die Beispiele näher erläutert. Dabei sollen zunächst Hinweise zur Verarbeitung der in den Beispielen eingesetzten Polymeren sowie zur Meßmethodik gegeben werden.

Das Polyaryletherketon I weist einen Staudingerindex von 1,2 dl/g auf, gemessen in 96 %iger Schwefelsäure bei 25 °C und enthält Wiederholeinheiten der folgenden Formel:

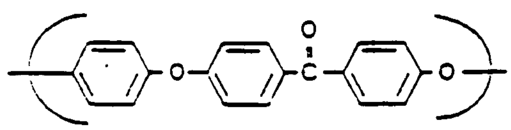

Das Polyaryletherketon II weist einen Staudingerindex von 1,0 dl/g auf, gemessen in 96 %iger Schwefelsäure bei 25 °C, und enthält Wiederholeinheiten der folgenden Formel:

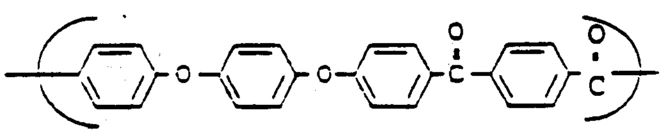

Das Polyaryletherketon III weist einen Staudingerindex von 1,0 dl/g auf, gemessen in 96 %iger Schwefelsäure bei 25 °C, und enthält Wiederholeinheiten der folgenden Formel:

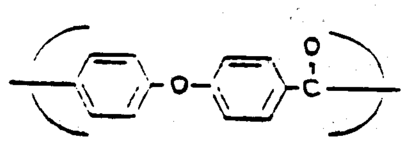

Das Polyimid I weist einen Staudingerindex von 0,6 dl/g auf, gemessen bei 25 °C in N-Methylpyrrolidon, und enthält Wiederholeinheiten der folgenden Formel:

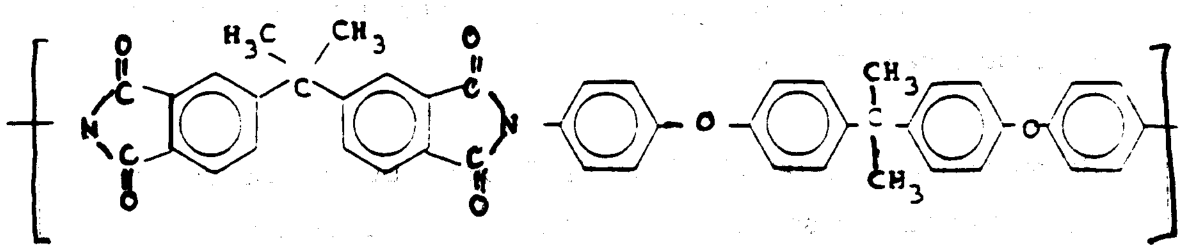

Der Polyarylester I weist einen Staudingerindex von 0,5 dl/g auf, gemessen in Methylenchlorid bei 25 °C, und enthält Wiederholeinheiten der folgenden Formel:

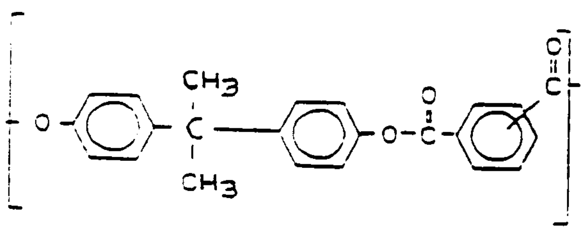

Der Polyarylester II weist einen Staudingerindex von 0,7 dl/g auf, gemessen in p-Chlorphenol bei 25 °C, und enthält Wiederholeinheiten der folgenden Formel:

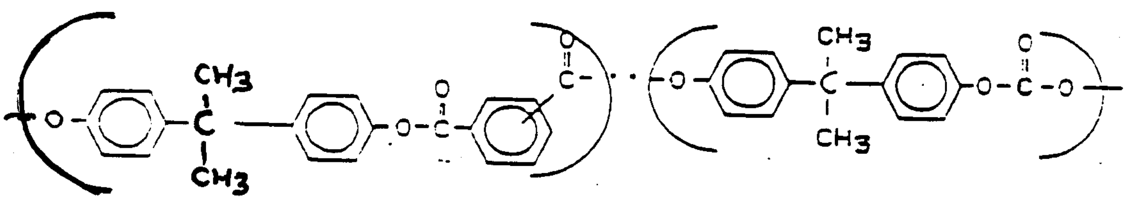

Die angeführten Polymere wurden zunächst getrocknet (140 °C, 24 h, verminderter Druck) und anschließend in verschiedenen Gewichtsverhältnissen entweder in einem Meßkneter (Fa. HAAKE, Rheocord System 90/Rheomix 600, Karlsruhe, Bundesrepublik Deutschland) unter Inertgas geknetet oder in einem Meßextruder unter Schutzgas extrudiert (Fa. HAAKE, Rheocord System 90/Rheomex TW 100). Als Inert- bzw. Schutzgas wurde vorzugsweise Argon eingesetzt. Die erhaltenen Legierungen wurden getrocknet (140 °C, 24 h, verminderter Druck) und anschließend auf ihre physikalischen Eigenschaften hin untersucht. Dazu wurden folgende Geräte verwendet:
Schmelzindex-Prüfgerät MPS-D der Fa. Goettfert, Buchen, Bundesrepublik Deutschland zur Messung von Fließfähigkeiten der Legierungen.

Differentialkalorimeter DSC 7 der Fa. Perkin Elmer, Überlingen, Bundesrepublik Deutschland zur Bestimmung von Glastemperaturen der Legierungen.

Beispiel 1:

Im Meßkneter wurden das Polyetherketon I, das Polyimid I und der Polyarylester I in verschiedenen Gewichtsverhältnissen bei einer Temperatur von 360 °C bei einer Drehzahl von 100 u/min für 30 Minuten gemeinsam geknetet. Die Tab. 1 zeigt, daß die überwiegende Zahl der Legierungen aus homogen mischbaren Komponenten besteht, da sie sowohl eine einzige von der Zusammensetzung abhängige Glastemperatur als auch transparente Schmelzen aufweist.

Tab. 1

| Zusammensetzung | | | | | | |
|---|---|---|---|---|---|---|
| Polyaryletherketon I [Gew.%] | Polyimid I [Gew.%] | Polyarylester I [Gew.%] | Glastemperatur | | Schmelzetransparenz | |
| | | | Anzahl | $T_G$[°C] | | |
| 100 | 0 | 0 | eine | 142 | ja | V |
| 0 | 100 | 0 | eine | 235 | ja | V |
| 0 | 0 | 100 | eine | 190 | ja | V |
| 50 | 50 | 0 | eine | 187 | ja | V |
| 80 | 10 | 10 | eine | 160 | ja | E |
| 70 | 15 | 15 | eine | 164 | je | E |
| 60 | 20 | 20 | eine | 168 | ja | E |
| 50 | 25 | 25 | eine | 172 | ja | E |
| 33,3 | 33,3 | 33,3 | eine | 176 | ja | V |
| 0 | 50 | 50 | eine | 203 | ja | V |
| 50 | 10 | 40 | zwei | | nein | V̄ |
| 70 | 20 | 10 | eine | 168 | ja | E |
| 70 | 10 | 20 | eine | 160 | ja | E |

Dabei bedeutet V = Vergleichsversuch und E = erfindungsgemäßes Beispiel.

Dieses Beispiel zeigt, daß die erfindungsgemäßen Legierungen in einem weiten Konzentrationsbereich homogen mischbar sind und höhere Glastemperaturen aufweisen als die Polyaryletherketone alleine.

Beispiel 2:

Mittels eines Zweischneckenextruders (alle vier Zonen 360 °C) wurden die in Beispiel 1 genannten Polymere nach Intensiver Trocknung (140 °C, 24 h, verminderter Druck) in verschiedenen Gewichsverhältnissen gemeinsam extrudiert und granuliert. Das Granulat wurde anschließend bei 140 °C für 24 Stunden unter vermindertem Druck getrocknet und für Messungen der Fließfähigkeit der Legierungen verwendet. In Tab. 2 sind die erhaltenen MFI-Werte (Schmelz-Index nach DIN 53735-MFI-B, Stempellast 5 kp, 360 °C, Zylinder: Innenmaß 9,55 ± 0,01 mm, Länge mind. 115 mm, Austrittsdüse 2,095 ± 0,005 mm) angegeben.

Tab. 2: Fließfähigkeit

| Zusammensetzung Polyaryletherketon I [Gew.-%] | Polyimid I [Gew.%] | Polyarylester I [Gew.%] | MFI [g/10 min] | |
|---|---|---|---|---|
| 100 | 0 | 0 | 5 | V |
| 0 | 100 | 0 | 5 | V |
| 0 | 0 | 100 | 40 | V |
| 50 | 50 | 0 | 17 | V |
| 80 | 10 | 10 | 9 | E |
| 70 | 15 | 15 | 11 | E |
| 60 | 20 | 20 | 12 | E |
| 50 | 25 | 25 | 14 | E |
| 33,3 | 33,3 | 33,3 | 18 | V |
| 70 | 20 | 10 | 11 | E |
| 70 | 10 | 20 | 15 | E |

Dabei bedeutet V = Vergleichsbeispiel und E = erfindungsgemäßes Beispiel.

Dieses Beispiel zeigt, daß die Schmelzeviskosität der Legierungen gemäß der Erfindung niedriger als die der Polyaryletherketone alleine sind.

Beispiel 3:

Es wurden im Kneter bei 380 °C für 30 Minuten bei 100 u/min miteinander geknetet: Polyaryletherketon II, Polyimid I und Polyarylester II in verschiedenen Zusammensetzungen. Die Tab. 3 zeigt, daß die überwiegende Zahl der Komponenten der Legierungen homogen mischbar sind, da diese transparente Schmelzen und eine einzige von der Zusammensetzung abhängige Glastemperatur aufweisen.

Tab. 3: Mischbarkeit

Zusammensetzung

| Polyaryl-ether-keton II [Gew.%] | Poly-imid I [Gew.%] | Poly-aryl-ester II [Gew.%] | Glas-temperatur Anzahl | $T_G$[°C] | Schmelzetransparenz | |
|---|---|---|---|---|---|---|
| 100 | 0 | 0 | eine | 160 | ja | V |
| 0 | 100 | 0 | eine | 235 | ja | V |
| 0 | 0 | 100 | eine | 190 | ja | V |
| 50 | 50 | 0 | eine | 205 | ja | V |
| 80 | 10 | 10 | eine | 166 | ja | E |
| 70 | 15 | 15 | eine | 170 | ja | E |
| 60 | 20 | 20 | eine | 180 | ja | E |

Dabei bedeutet V = Vergleichsbeispiel und E = erfindungsgemäßes Beispiel.

Beispiel 4:

Es wurden 30 g des Polyaryletherketones III, 10 g des Polyimides I und 10 g des Polyarylesters II bei 390 °C im Kneter für 20 min bei 100 u/min gemeinsam geknetet. Es lag eine transparente Schmelze vor, und die resultierende Legierung wies eine einzige Glastemperatur von 175 °C auf.

**Patentansprüche**

**1.** Legierung aus homogen gemischten Polymeren enthaltend
(a) mindestens ein Polyaryletherketon,
(b) mindestens ein Polyimid,
(c) mindestens einen Polyarylester, dadurch gekennzeichnet, daß die Legierung eine einzige Glastemperatur aufweist, das Polyimid (b) Wiederholeinheiten der Formel

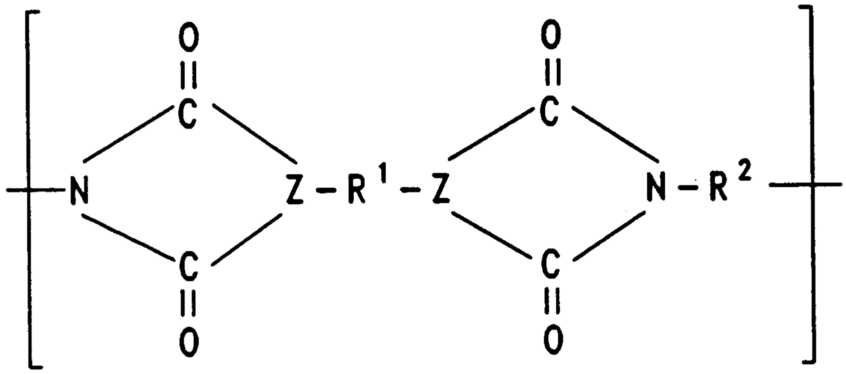

oder der Formel

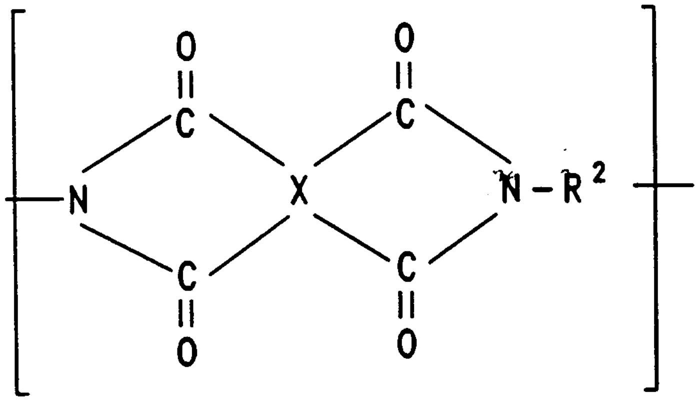

aufweist, wobei $R^1$ für O, S, CO, SO, $SO_2$, Alkylen mit jeweils 1 bis 6 Kohlenstoffatomen, $C(CH_3)_2$, $C(CF_3)_2$, $C(CH_3)(CF_3)$ oder eine direkte Bindung steht, und $R^2$ ein bivalenter Kohlenwasserstoffrest ist, ausgewählt aus
($\alpha$) einem substituierten oder unsubstituierten Rest der folgenden Formeln

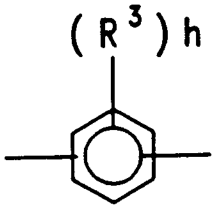

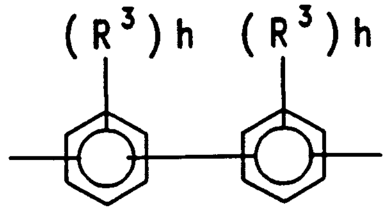

($\beta$) einem Rest der allgemeinen Formel

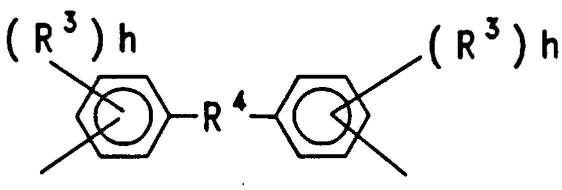

wobei $R^3$ für $C_1$-$C_5$-Alkyl oder Halogen steht, und $R^4$ die Bedeutung hat von O, S, CO, SO, $SO_2$, Alkylen mit 1 bis 9 C-Atomen, Alkyliden mit 1 bis 6 C-Atomen, Cycloalkylen oder Cycloalkyliden mit

jeweils 4 bis 9 C-Atomen, und der Index h ganze Zahlen Null, 1, 2, 3 oder 4 bedeutet
oder
($\gamma$) einem Rest der allgemeinen Formel

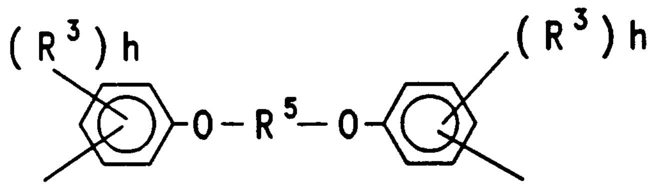

wobei $R^5$ die Bedeutung hat von einem substituierten oder unsubstituierten aromatischen Rest der folgenden Formeln

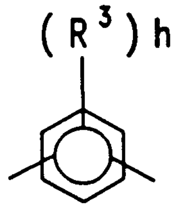

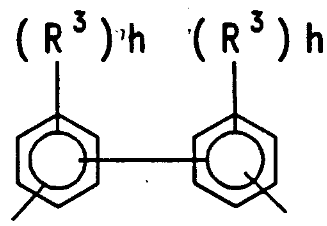

oder einem bivalenten Rest der allgemeinen Formel

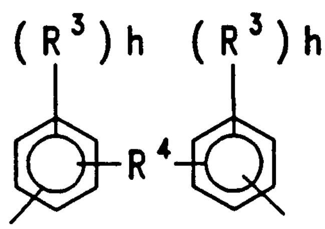

wobei $R^3$, $R^4$ und der Index h die obige Bedeutung haben,
Z für

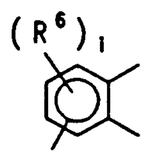

und X für

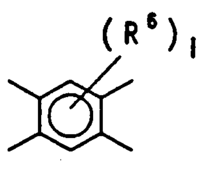

oder

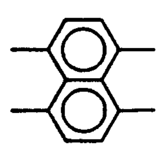

steht,

$R^6$ unabhängig voneinander Alkyl mit 1 bis 6 C-Atomen oder Alkoxy mit 1 bis 6 C-Atomen, bedeutet, der Index i für ganze Zahlen Null, 1, 2 oder 3, der Index j für ganze Zahlen Null, 1 oder 2 steht, und der Polyarylester (c) sich ableitet von wenigstens einer Dihydroxyarylverbindung und wenigstens einer aromatischen Dicarbonsäure oder der Polyarylester ein Polyestercarbonat ist, das sich ableitet von wenigstens einer Dihydroxyarylverbindung, einem Kohlensäurederivat und mindestens einer aromatischen Dicarbonsäure,

und der Staudingerindex von (a) 0,2 bis 5,0 dl/g, von (b) 0,1 bis 3,0 dl/g und von (c) 0,1 bis 2,0 dl/g und der Anteil der Komponenten (a) 60 bis 95, (b) 2 bis 35 und (c) 2 bis 35 Gewichtsprozent beträgt, jeweils bezogen auf die Gesamtmenge der Komponenten (a), (b) und (c) in der Legierung.

**2.** Legierung nach Anspruch 1, dadurch gekennzeichnet, daß der Anteil der Komponente (a) 75 bis 95, der Komponente (b) 2 bis 20 und der Komponente (c) 2 bis 20 Gewichtsprozent beträgt.

**3.** Legierung nach Anspruch 1, dadurch gekennzeichnet, daß die Staudingerindices der Komponente (a) 0,5 bis 2,5 dl/g, der Komponente (b) 0,3 bis 1,5 dl/g und der Komponente (c) 0,3 bis 1,5 dl/g betragen.

**4.** Legierung nach Anspruch 3, dadurch gekennzeichnet, daß die Staudingerindices der Komponente (a) 0,7 bis 2,0 dl/g, der Komponente (b) 0,3 bis 1,0 dl/g und der Komponente (c) 0,3 bis 1,0 dl/g betragen.

**5.** Legierung nach Anspruch 1, dadurch gekennzeichnet, daß das Polyaryletherketon Wiederholeinheiten einer oder mehrerer der folgenden Formeln enthält:

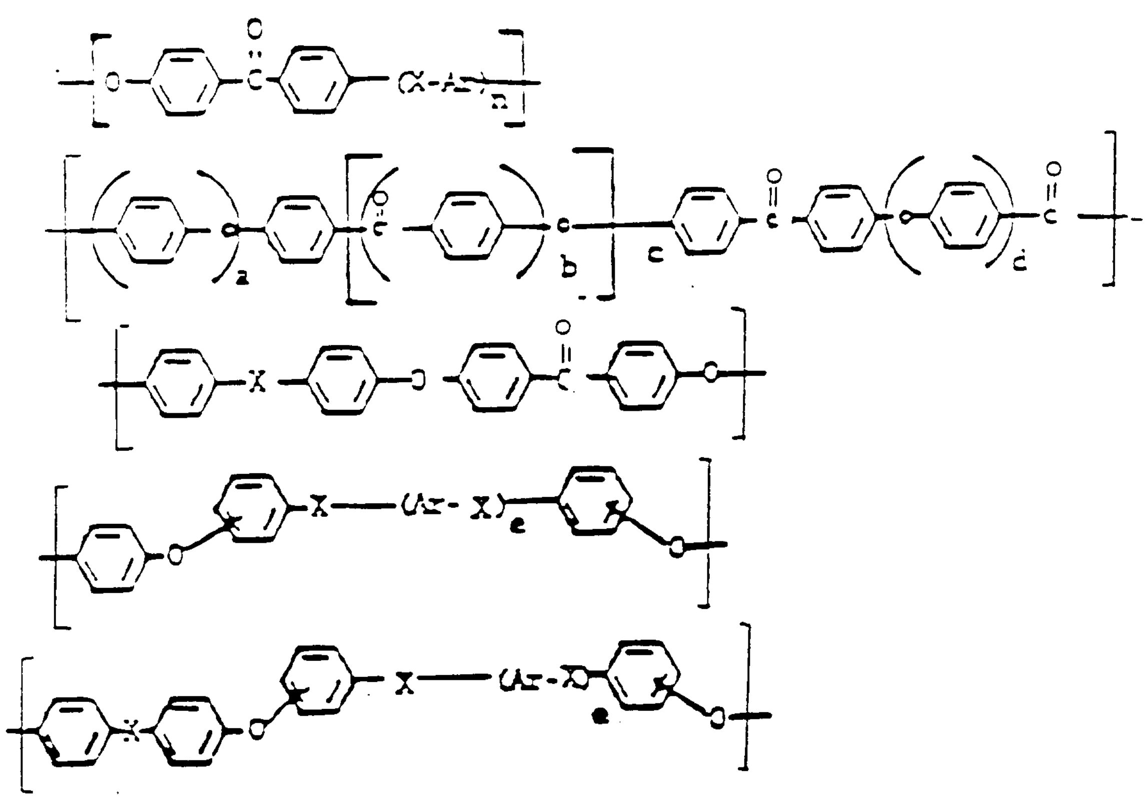

wobei Ar einen zweiwertigen aromatischen Rest darstellt, ausgewählt aus Phenylen, Biphenylen oder Naphthylen, und X unabhängig voneinander für O, CO oder eine direkte Bindung steht, n ist Null oder als ganze Zahl 1, 2 oder 3, b, c, d und e sind Null oder 1, a ist als ganze Zahlt 1, 2, 3 oder 4 und d ist bevorzugt Null, falls b gleich 1 ist.

**6.** Legierung nach Anspruch 5, dadurch gekennzeichnet, daß das Polyaryletherketon Wiederholeinheiten einer der folgenden Strukturen aufweist:

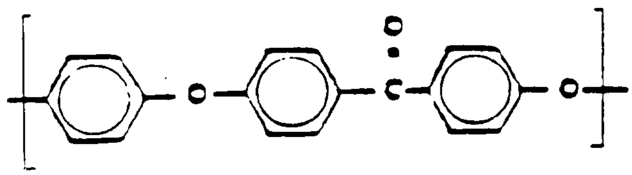

oder

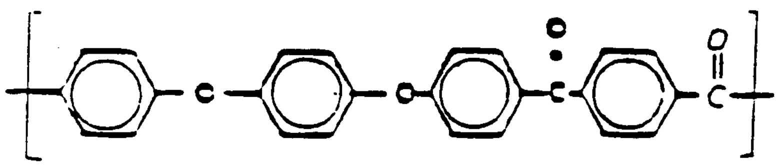

oder

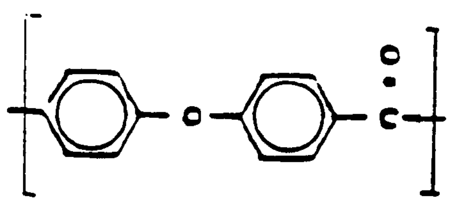

7. Legierung nach Anspruch 1, dadurch gekennzeichnet, daß das Polyimid Wiederholeinheiten der folgenden Formeln aufweist:

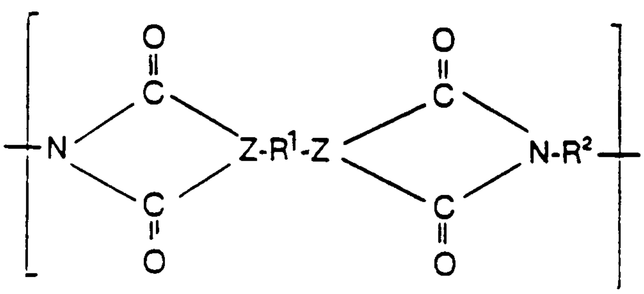

oder

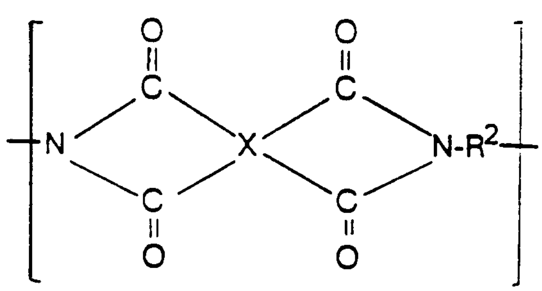

wobei $R^1$ für O, S, CO, SO, $SO_2$, Alkylen mit jeweils 1 bis 6 Kohlenstoffatomen, $C(CH_3)_2$, $C(CF_3)_2$, C-$(CH_3)(CF_3)$ oder eine direkte Bindung steht, und $R^2$ ein bivalenter Kohlenwasserstoffrest ist, ausgewählt aus

(α) einem substituierten oder unsubstituierten Rest der folgenden Formeln

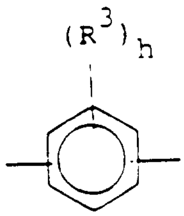

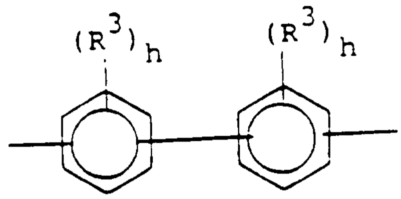

(β) einem Rest der allgemeinen Formel

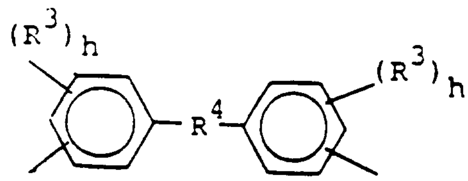

,

wobei $R^3$ für $C_1$-$C_6$-Alkyl oder Halogen steht, und $R^4$ die Bedeutung hat von O, S, CO, SO, $SO_2$, Alkylen mit 1-9 C-Atomen, Alkyliden mit 1 bis 6 C-Atomen, Cycloalkylen oder Cycloalkyliden mit jeweils 4 bis 9 C-Atomen, und der Index h ganze Zahlen Null, 1, 2, 3 oder 4 bedeutet
oder
(γ) einem Rest der allgemeinen Formel

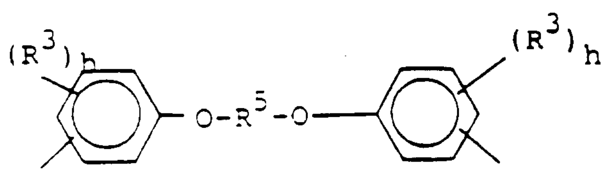

,

wobei $R^5$ die Bedeutung hat von einem substituierten oder unsubstituierten aromatischen Rest der folgenden Formeln

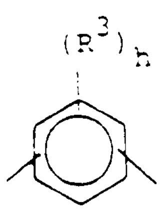

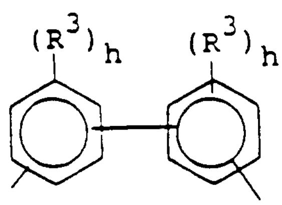

oder einem bivalenten Rest der allgemeinen Formel

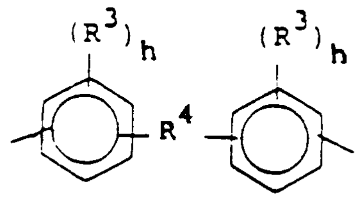

,

wobei $R^3$, $R^4$ und der Index h die obige Bedeutung haben,
"Z" für

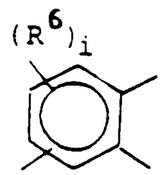

und "X" für

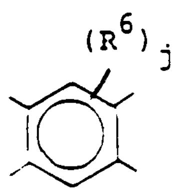

oder

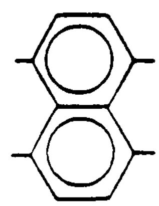

,

steht,
wobei $R^6$ unabhängig voneinander Alkyl mit 1 bis 6 C-Atomen wie Methyl, Ethyl, die verschiedenen Isomere des Propyls, Butyls, Pentyls oder Hexyls oder Alkoxy mit 1 bis 6 C-Atomen, beispielsweise Methoxy, Ethoxy oder Butoxy, bedeutet, und der Index i für ganze Zahlen Null, 1, 2 oder 3, und der Index j für ganze Zahlen Null, 1 oder 2 steht.

**8.** Legierung nach Anspruch 1, dadurch gekennzeichnet, daß das Polyimid Wiederholeinheiten der folgenden Formeln aufweist:

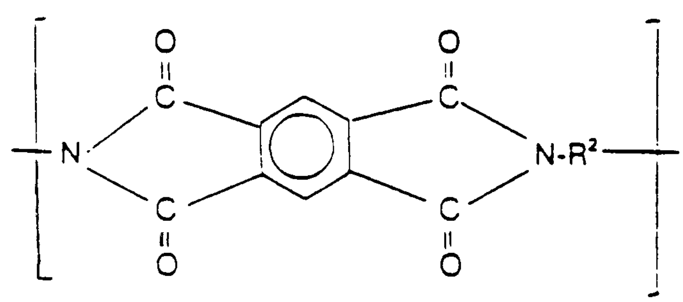

oder

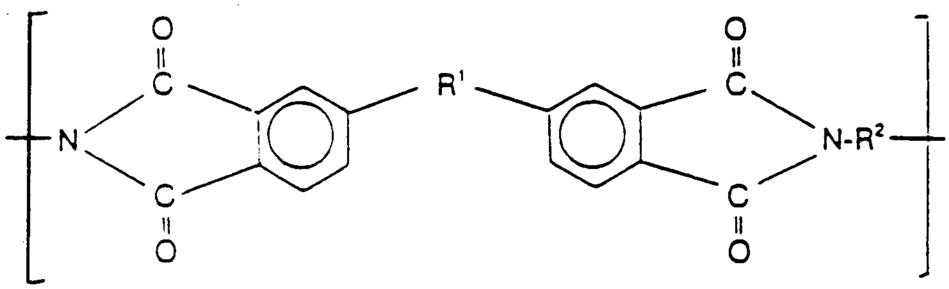

wobei $R^1$ und $R^2$ die obengenannte Bedeutung haben.

**9.** Legierung nach Anspruch 1, dadurch gekennzeichnet, daß das Polyimid Wiederholeinheiten der folgenden Formeln aufweist:

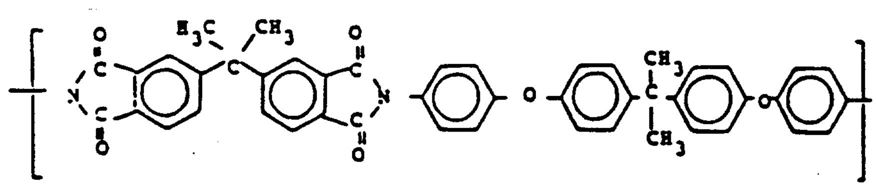

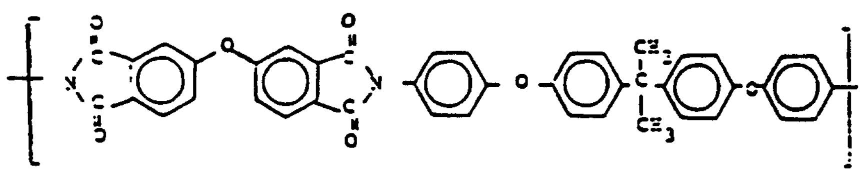

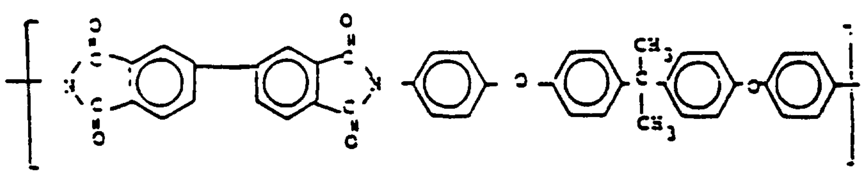

**10.** Legierung nach Anspruch 1, dadurch gekennzeichnet, daß der Polyarylester Wiederholeinheiten der folgenden Formel aufweist:

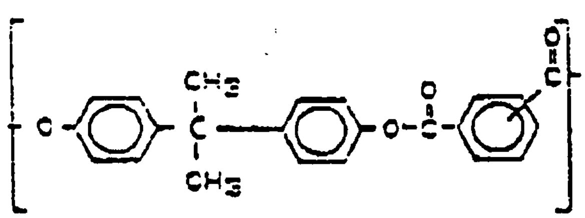

**11.** Legierung nach Anspruch 1, dadurch gekennzeichnet, daß das Dihydroxyaryl folgende Formel aufweist:

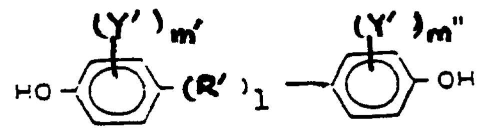

in der Y' Alkyl mit 1 bis 4 Kohenstoffatomen, Cycloalkyl mit 6 bis 12 Kohlenstoffatomen oder Halogen bedeutet, m' und m'' unabhängig voneinander Null, 1, 2, 3 oder 4 bedeuten, R' Alkylen oder Alkyliden mit 1 bis 9 Kohlenstoffatomen ist und der Index I Null oder 1 ist.

**12.** Legierung nach Anspruch 11, dadurch gekennzeichnet, daß die Dihydroxyarylverbindung

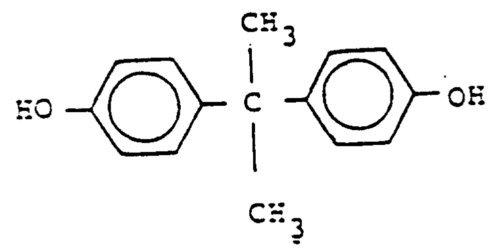

ist.

**13.** Legierung nach Anspruch 1, dadurch gekennzeichnet, daß die aromatische Dicarbonsäure die folgende Formel aufweist:

HOOC - R'' - COOH

wobei R'' ausgewählt ist aus den Gruppen

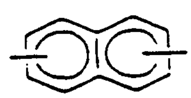

oder

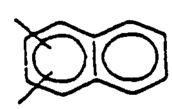

oder

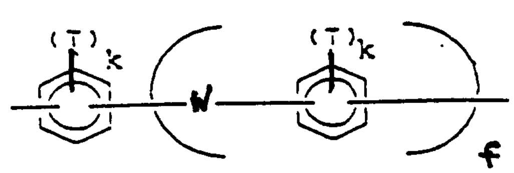

wobei f Null oder 1 ist und W für O, $SO_2$, CO, $C(CH_3)_2$, $CH_2$, S oder

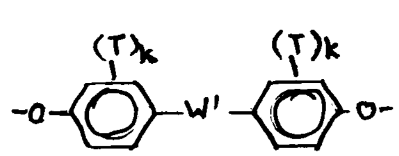

steht, wobei W' für O, $SO_2$, CO, $C(CH_3)_2$, $CH_2$ oder S steht und T in den Formeln Alkyl mit 1 bis 6 C-Atomen oder Halogen ist und der Index k ganze Zahlen Null, 1, 2, 3 oder 4 bedeutet.

14. Legierung nach Anspruch 13, dadurch gekennzeichnet, daß die aromatische Dicarbonsäure ausgewählt ist aus Isophthalsäure, Terephthalsäure und deren reaktiven Derivaten sowie Mischungen davon.

15. Legierung nach 10, dadurch gekennzeichnet, daß der Polyarylester Wiederholeinhelten der folgenden Formel aufweist:

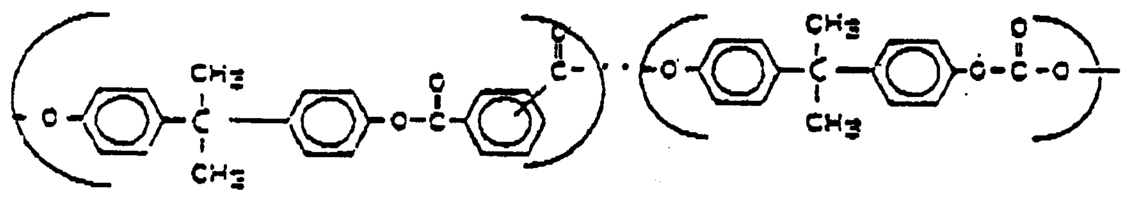

16. Legierung nach Anspruch 1, dadurch gekennzeichnet, daß das Polyaryletherketon Wiederholeinheiten der folgenden Formel

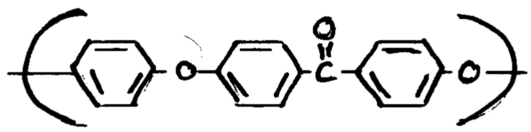

und das Polyimid Wiederholeinheiten der folgenden Formel

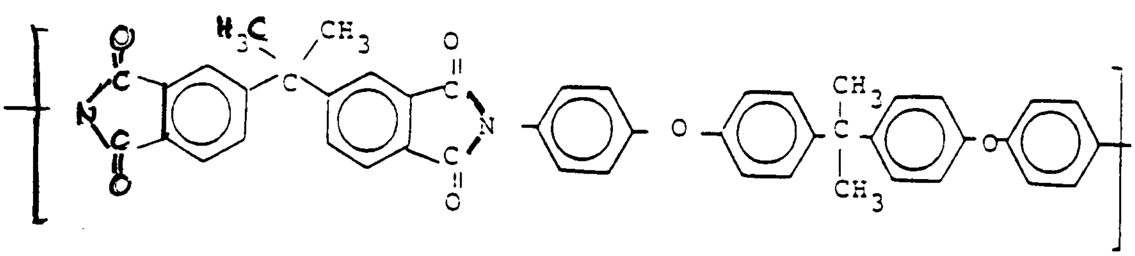

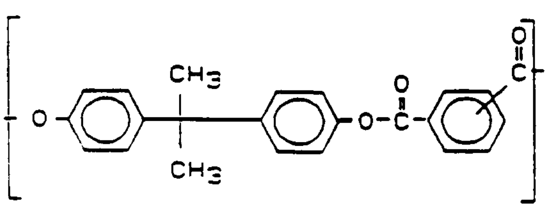

.

17. Legierung nach Anspruch 1, dadurch gekennzeichnet, daß das Polyaryletherketon Wiederholeinheiten der folgenden Formel

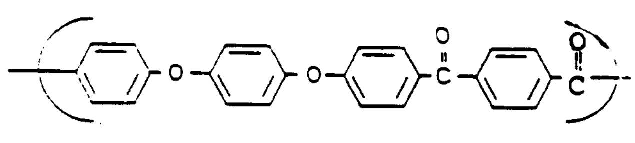

und das Polyimid Wiederholeinheiten der folgenden Formel

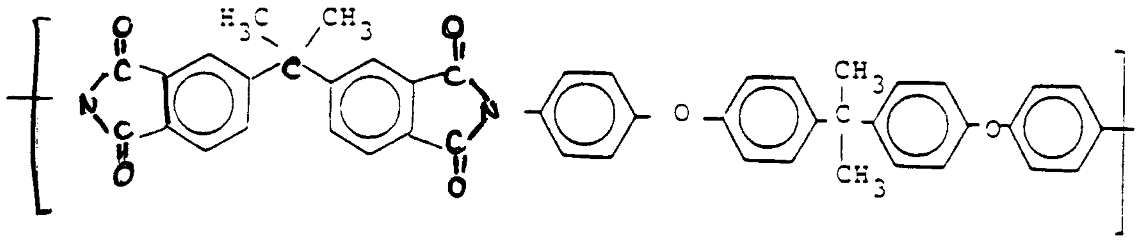

und der Polyarylester Wiederholeinheiten der folgenden Formel enthält

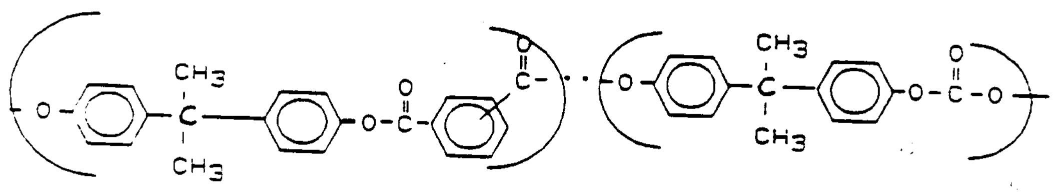

**18.** Legierung nach Anspruch 1, dadurch gekennzeichnet, daß das Polyaryletherketon Wiederholeinheiten der folgenden Formel

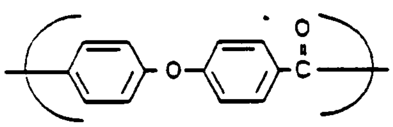

und das Polyimid Wiederholeinheiten der folgenden Formel

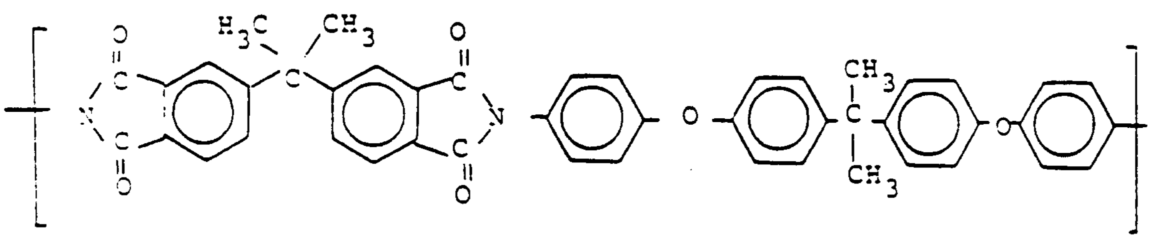

und der Polyarylester Wiederholeinheiten der folgenden Formel enthält

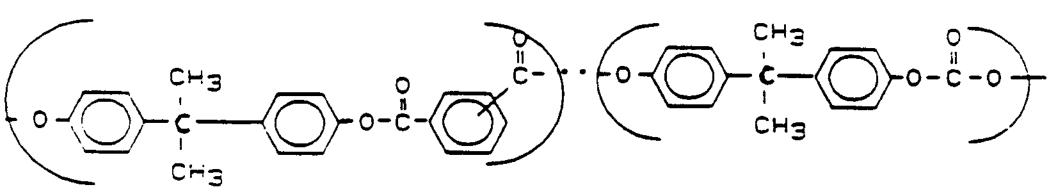

**19.** Verwendung einer Legierung nach Anspruch 1 zur Herstellung von Formkörpern oder als Matrixmaterial für Composites.

## Claims

1. An alloy of homogeneously mixed polymers comprising
   (a) at least one polyaryl ether ketone,
   (b) at least one polyimide and
   (c) at least one polyaryl ester, wherein the alloy has a single glass transition temperature, the polyimide (b) contains recurring units of the formula

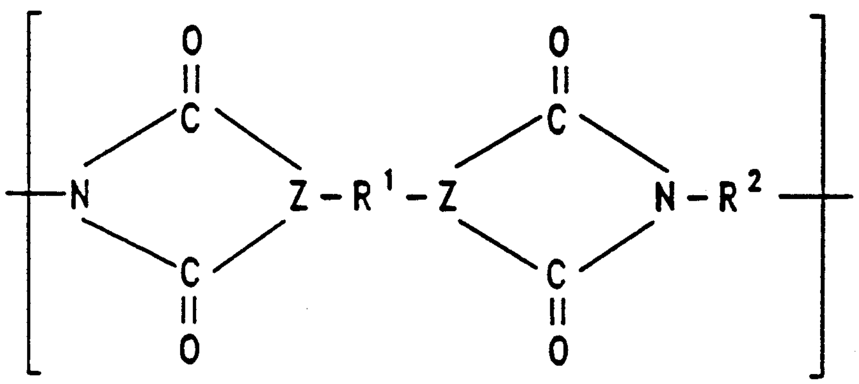

or of the formula

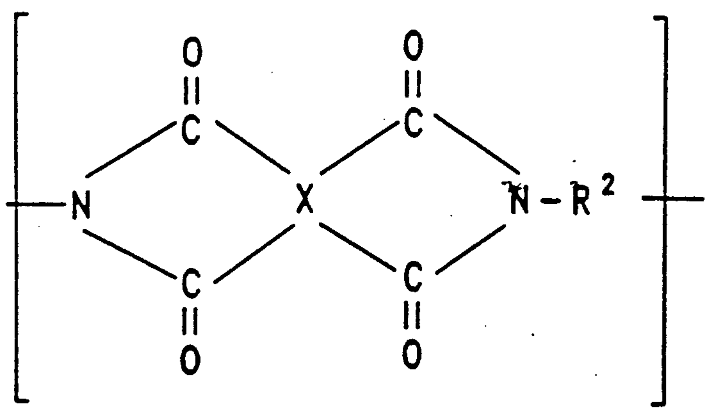

in which $R^1$ is O, S, CO, SO, $SO_2$, alkylene having in each case 1 to 6 carbon atoms, $C(CH_3)_2$, $C(CF_3)_2$, $C(CH_3)(CF_3)$ or a direct bond and
$R^2$ is a bivalent hydrocarbon radical selected from
($\alpha$) a substituted or unsubstituted radical of the following formulae

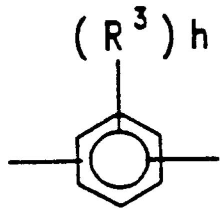

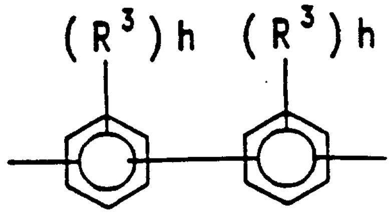

β) a radical of the formula

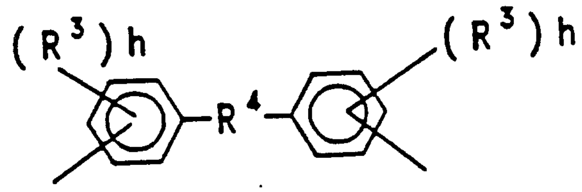

in which $R^3$ is $C_1$-$C_5$-alkyl or halogen, $R^4$ is O, S, CO, SO, $SO_2$, alkylene having 1 to 9 carbon atoms, alkylidene having 1 to 6 carbon atoms or cycloalkylene or cycloalkylidene having in each case 4 to 9 carbon atoms, and the index h is the integer zero, 1, 2, 3 or 4,
or
(γ) a radical of the formula

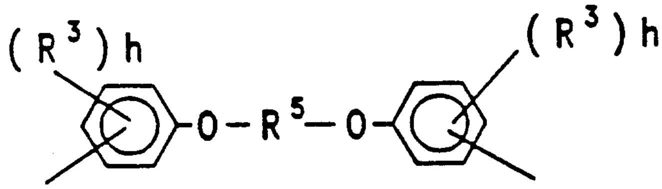

in which $R^5$ is a substituted or unsubstituted aromatic radical of the following formulae

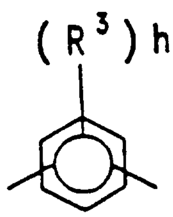

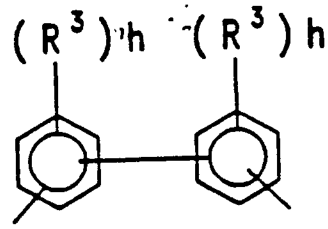

or a bivalent radical of the formula

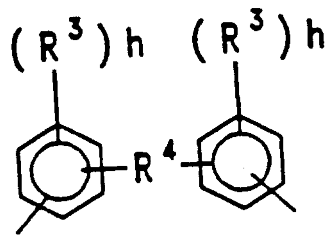

in which $R^3$, $R^4$ and the index h have the above meaning,
Z is

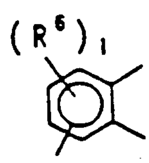

and X is

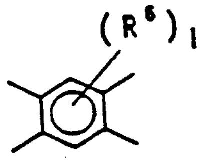

or

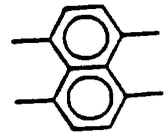

the $R^6$ independently of one another are alkyl having 1 to 6 carbon atoms or alkoxy having 1 to 6 carbon atoms, the index i is the integer zero, 1, 2 or 3 and the index j is the integer zero, 1 or 2 and the polyaryl ester (c) is derived from at least one dihydroxyaryl compound and at least one aromatic dicarboxylic acid, or the polyaryl ester is a polyester carbonate which is derived from at least one dihydroxyaryl compound, a carbonic acid derivative and at least one aromatic dicarboxylic acid,
and the limiting viscosity index of (a) is 0.2 to 5.0 dl/g, of (b) is 0.1 to 3.0 dl/g and of (c) is 0.1 to 2.0 dl/g, and the content of components (a) is 60 to 95 percent by weight, of (b) is 2 to 35 percent by weight and of (c) is 2 to 35 percent by weight, in each case based on the total amount of components (a), (b) and (c) in the alloy.

**2.** An alloy as claimed in claim 1, wherein the content of component (a) is 75 to 95 percent by weight, that of component (b) is 2 to 20 percent by weight and that of component (c) is 2 to 20 percent by weight.

**3.** An alloy as claimed in claim 1, wherein the limiting viscosity index of component (a) is 0.5 to 2.5 dl/g, of component (b) is 0.3 to 1.5 dl/g and of component (c) is 0.3 to 1.5 dl/g.

**4.** An alloy as claimed in claim 3, wherein the limiting viscosity index of component (a) is 0.7 to 2.0 dl/g, of component (b) is 0.3 to 1.0 dl/g and of component (c) is 0.3 to 1.0 dl/g.

**5.** An alloy as claimed in claim 1, wherein the polyaryl ether ketone contains recurring units of one or more of the following formulae:

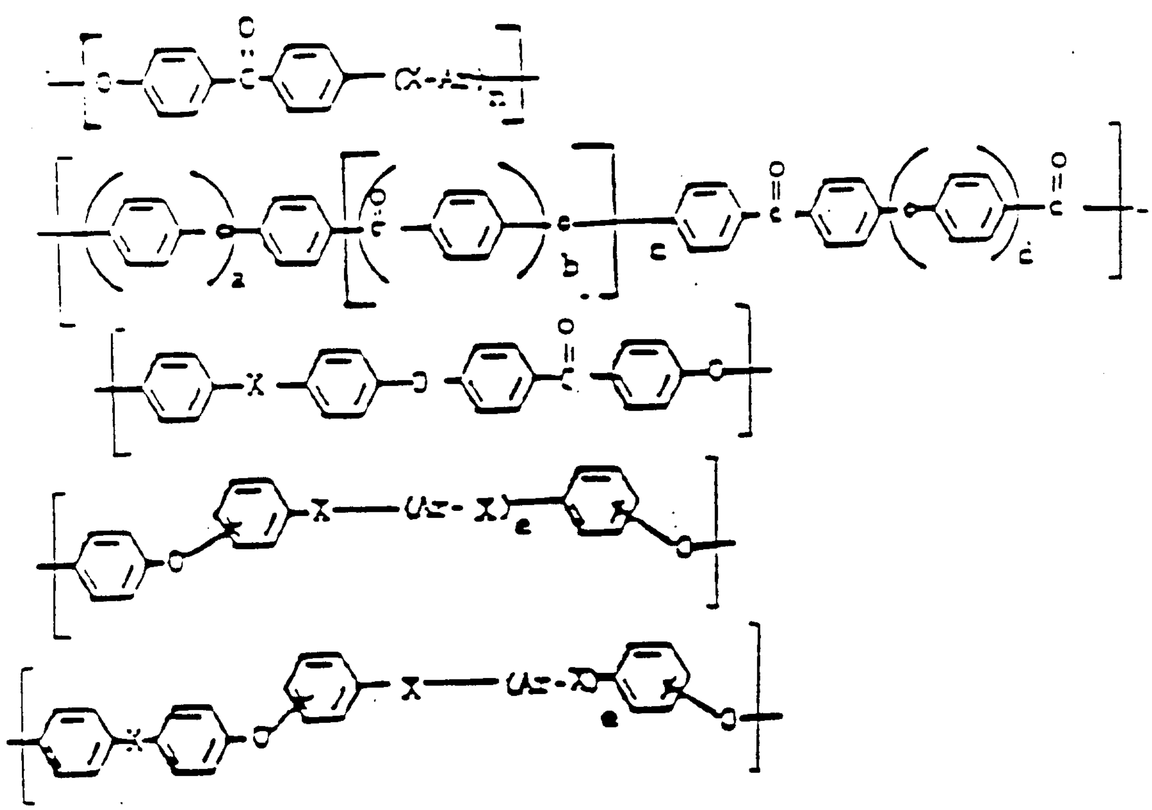

in which Ar is a divalent aromatic radical selected from phenylene, biphenylene and naphthylene, the x

independently of one another are O, CO or a direct bond, n is zero or the integer 1, 2 or 3, b, c, d and e are zero or 1, a is the integer 1, 2, 3 or 4 and d is preferably zero if b is 1.

**6.** An alloy as claimed in claim 5, wherein the polyaryl ether ketone contains recurring units of one of the following structures:

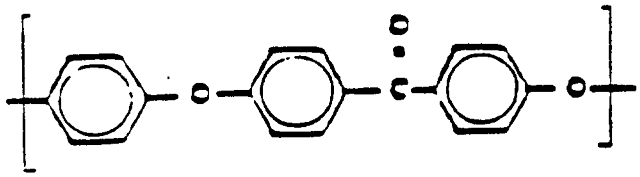

or

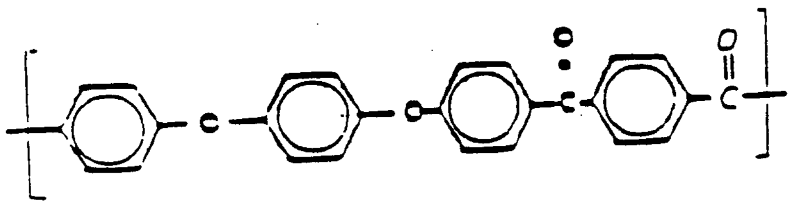

or

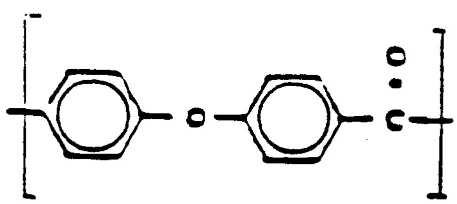

**7.** An alloy as claimed in claim 1, wherein the polyimide contains recurring units of the following formulae:

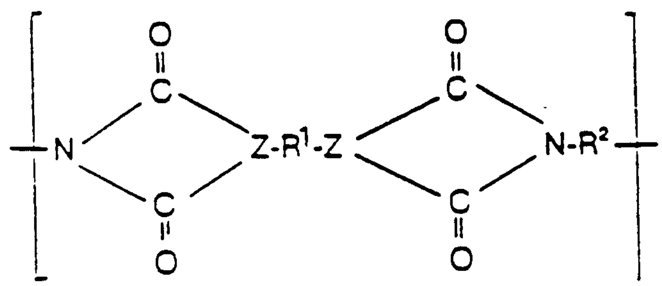

or

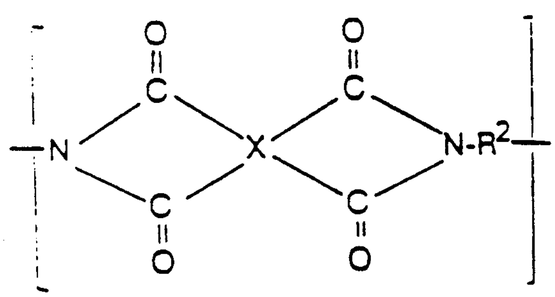

in which $R^1$ is O, S, CO, SO, $SO_2$, alkylene having in each case 1 to 6 carbon atoms, $C(CH_3)_2$, $C(CF_3)_2$,

$C(CH_3)(CF_3)$ or a direct bond and

$R^2$ is a bivalent hydrocarbon radical selected from

($\alpha$) a substituted or unsubstituted radical of the following formulae

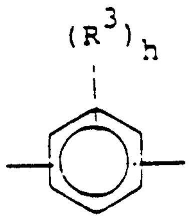

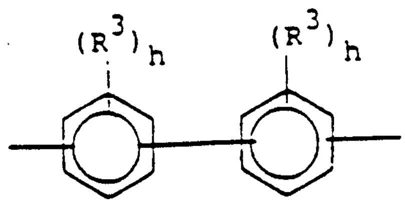

($\beta$) a radical of the formula

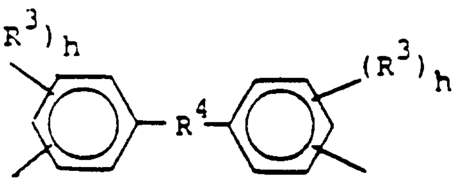

in which $R^3$ is $C_1$-$C_6$-alkyl or halogen, $R^4$ is O, S, CO, SO, $SO_2$, alkylene having 1-9 carbon atoms, alkylidene having 1 to 6 carbon atoms or cycloalkylene or cycloalkylidene having in each case 4 to 9 carbon atoms and the index h is the integer zero, 1, 2, 3 or 4,

or

($\gamma$) is a radical of the formula

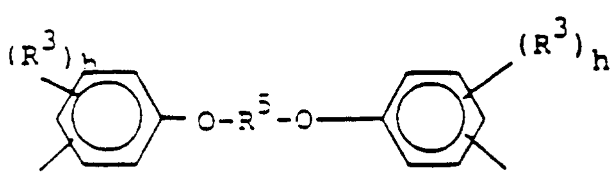

in which $R^5$ is a substituted or unsubstituted aromatic radical of the following formulae:

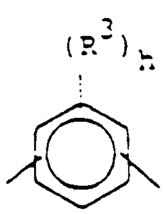

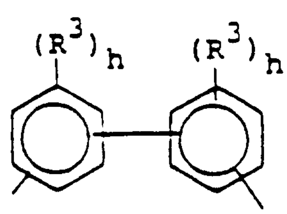

or a bivalent radical of the formula

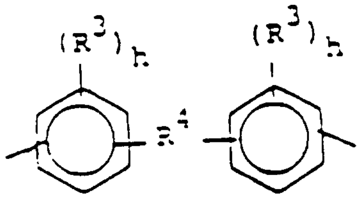

in which $R^3$, $R^4$ and the index h have the above meaning,
"Z" is

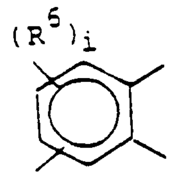

and "X" is

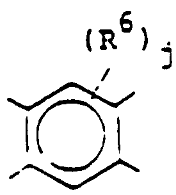

or

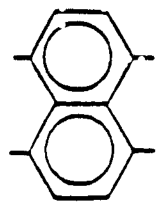

,

in which the $R^6$ independently of one another are alkyl having 1 to 6 carbon atoms, such as methyl, ethyl or the various isomers of propyl, butyl, pentyl or hexyl, or alkoxy having 1 to 6 carbon atoms, for example methoxy, ethoxy or butoxy, the index i is the integer zero, 1, 2 or 3 and the index j is the integer zero, 1 or 2.

**8.** An alloy as claimed in claim 1, wherein the polyimide contains recurring units of the following formulae:

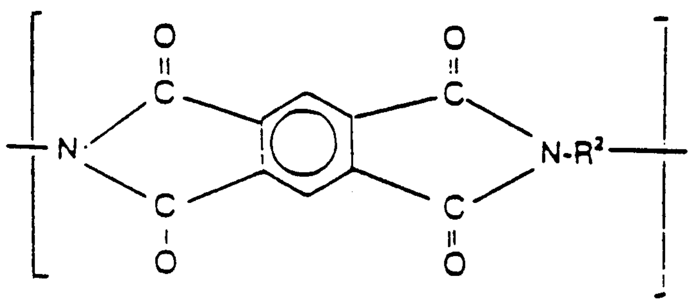

or

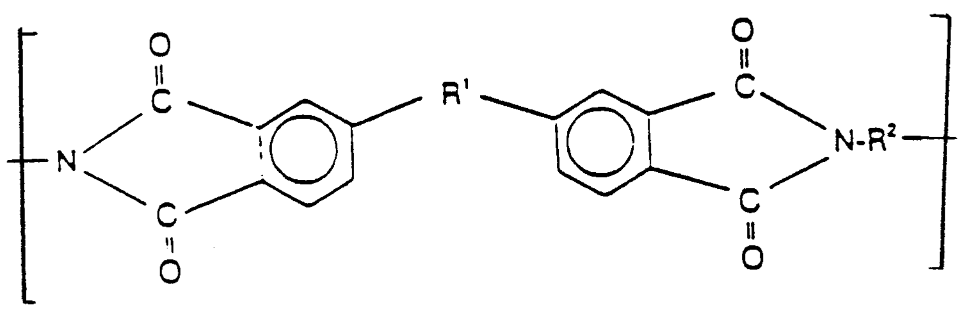

in which $R^1$ and $R^2$ have the abovementioned meaning.

**9.** An alloy as claimed in claim 1, wherein the polyimide contains recurring units of the following formulae:

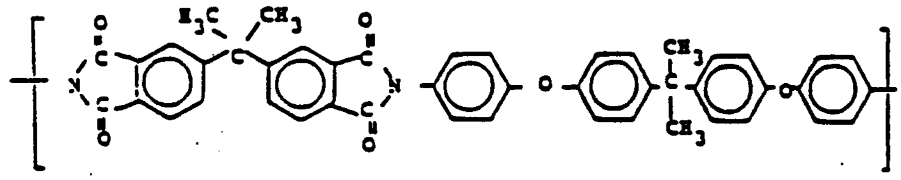

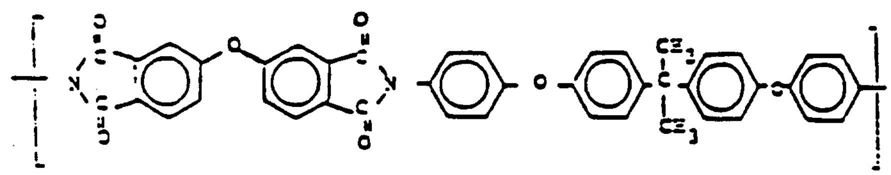

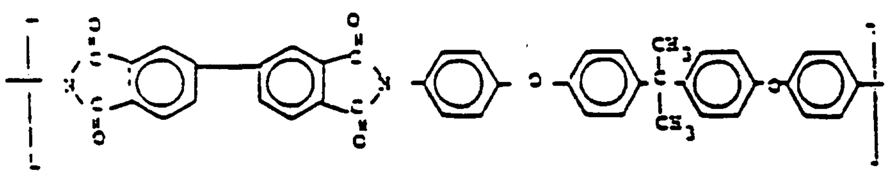

**10.** An alloy as claimed in claim 1, wherein the polyaryl ester contains recurring units of the following formula:

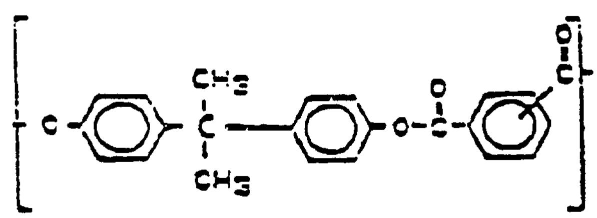

**11.** An alloy as claimed in claim 1, wherein the dihydroxyaryl has the following formula:

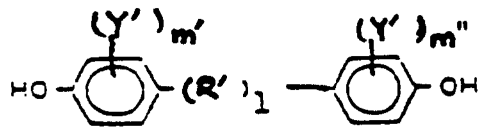

in which Y' is alkyl having 1 to 4 carbon atoms, cycloalkyl having 6 to 12 carbon atoms or halogen, m' and m'' independently of one another are zero, 1, 2, 3 or 4, R' is alkylene or alkylidene having 1 to 9 carbon atoms and the index 1 is zero or 1.

**12.** An alloy as claimed in claim 11, wherein the dihydroxyaryl compound is

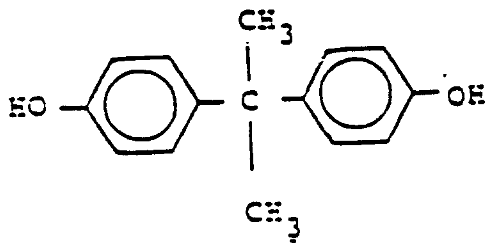

**13.** An alloy as claimed in claim 1, wherein the aromatic dicarboxylic acid has the following formula:

HOOC - R'' - COOH

in which R'' is selected from the groups

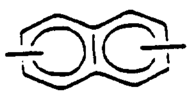

or

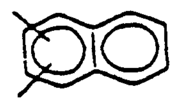

or

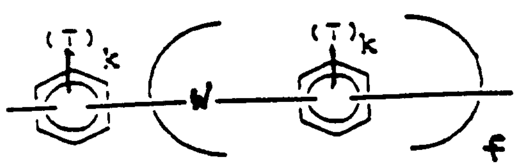

in which f is zero or 1 and W is O, $SO_2$, CO, $C(CH_3)_2$, $CH_2$, S or

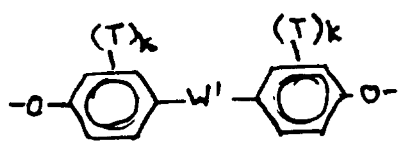

in which W' is O, $SO_2$, CO, $C(CH_3)_2$, $CH_2$ or S, T in the formulae is alkyl having 1 to 6 carbon atoms or halogen and the index k is the integer zero, 1, 2, 3 or 4.

**14.** An alloy as claimed in claim 13, wherein the aromatic dicarboxylic acid is selected from isophthalic acid, terephthalic acid and reactive derivatives and mixtures thereof.

**15.** An alloy as claimed in claim 10, wherein the polyaryl ester contains recurring units of the following formula:

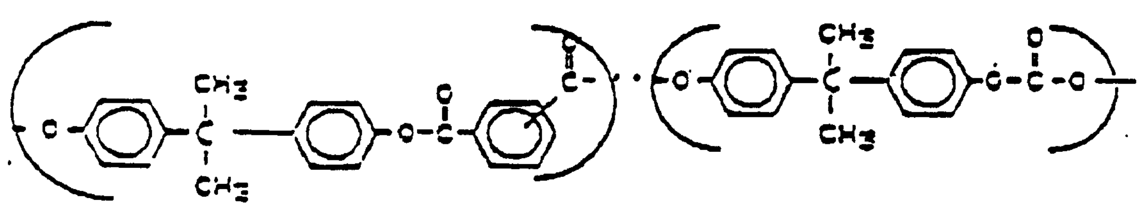

16. An alloy as claimed in claim 1, wherein the polyaryl ether ketone contains recurring units of the following formula

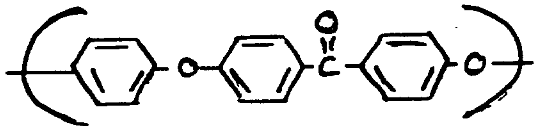

and the polyimide contains recurring units of the following formula

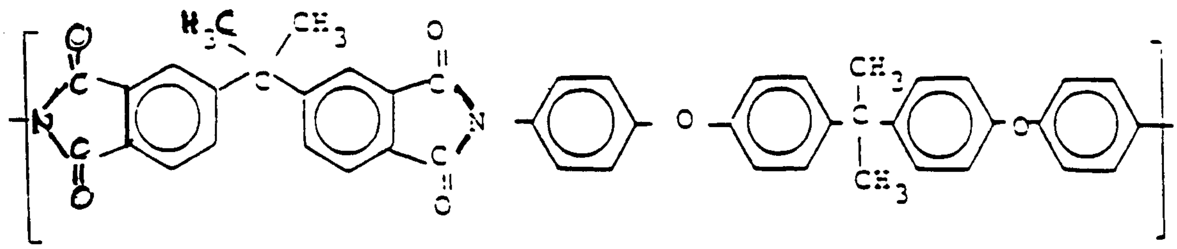

and the polyaryl ester contains recurring units of the following formula

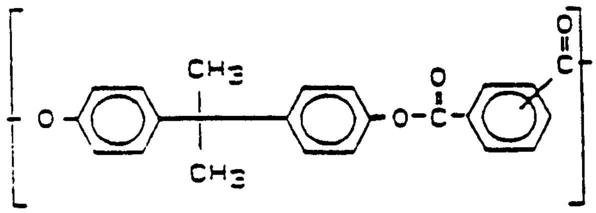

17. An alloy as claimed in claim 1, wherein the polyaryl ether ketone contains recurring units of the following formula

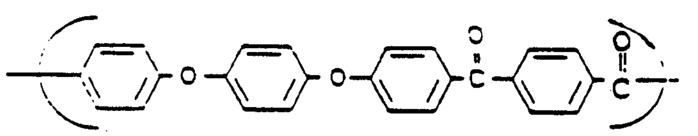

and the polyimide contains recurring units of the following formula

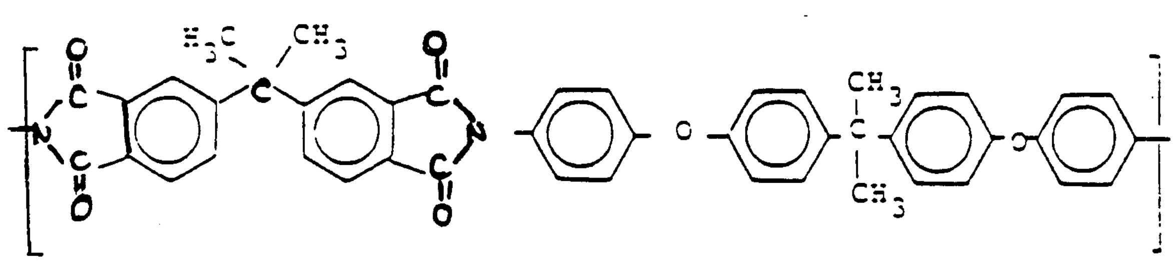

and the polyaryl ester contains recurring units of the following formula

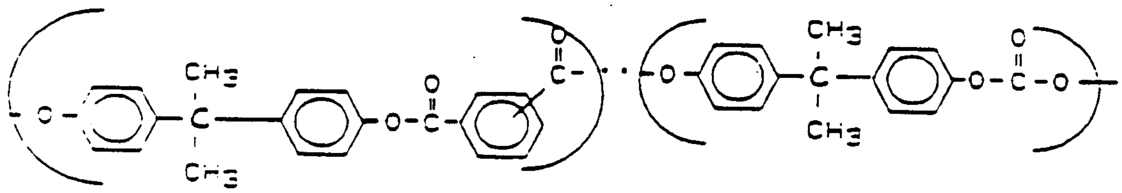

**18.** An alloy as claimed in claim 1, wherein the polyaryl ether ketone contains recurring units of the following formula

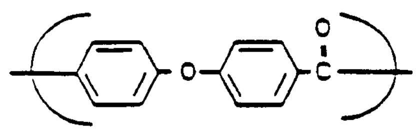

and the polyimide contains recurring units of the following formula

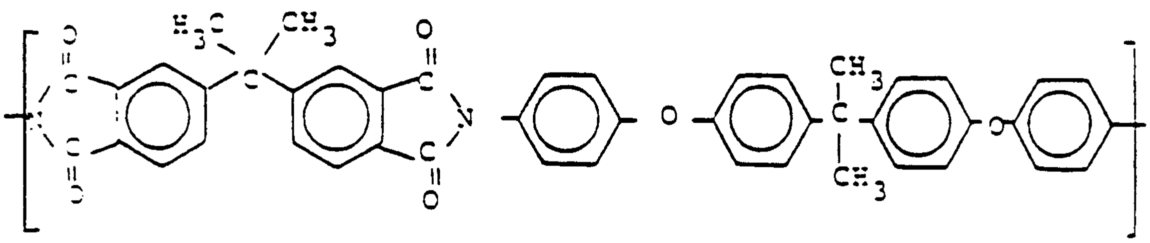

and the polyaryl ester contains recurring units of the following formula

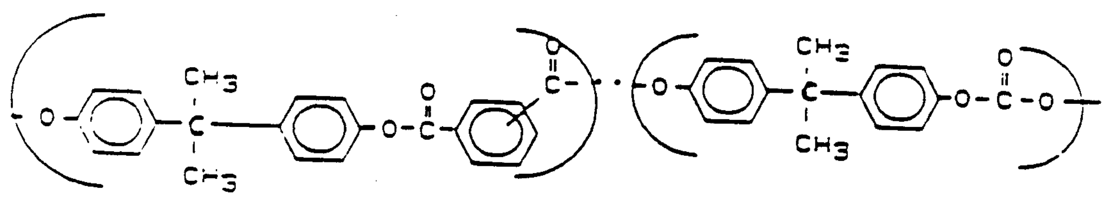

**19.** The use of an alloy as claimed in claim 1 for the production of shaped articles or as a matrix material for composites.

**Revendications**

**1.** Alliage d'un mélange homogène de matières polymères comprenant

a) au moins une polyaryléthercétone,

b) au moins un polyimide,

c) au moins un polyester arylique, alliage caractérisé en ce qu'il n'a qu'une seule température de transition vitreuse et le polyimide (b) comporte des motifs récurrents de formule

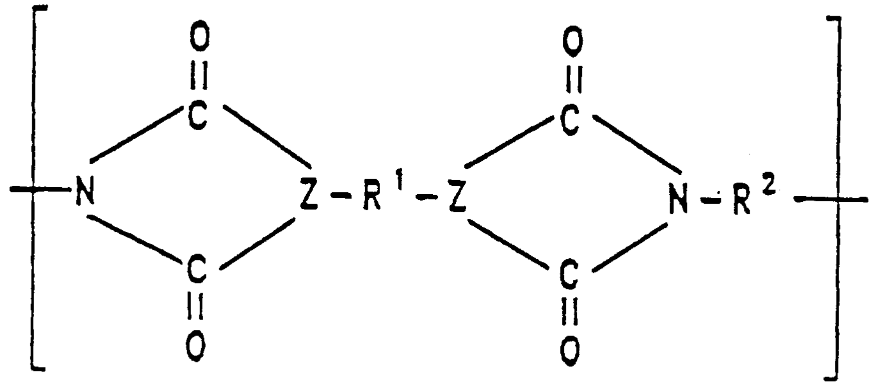

ou de formule

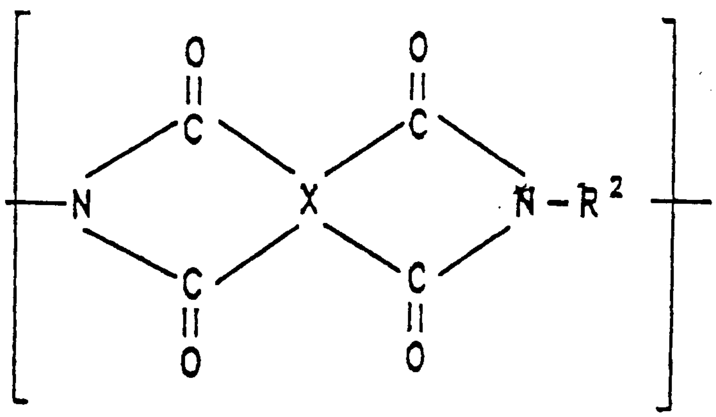

$R^1$ désignant O, S, CO, SO, $SO_2$, un alkylène avec à chaque fois de 1 à 6 atomes de carbone, C-$(CH_3)_2$, $C(CF_3)_2$, $C(CH_3)$ $(CF_3)$ ou une liaison directe, et $R^2$ un radical hydrocarboné bivalent pris parmi
($\alpha$) un radical substitué ou non, de formules suivantes

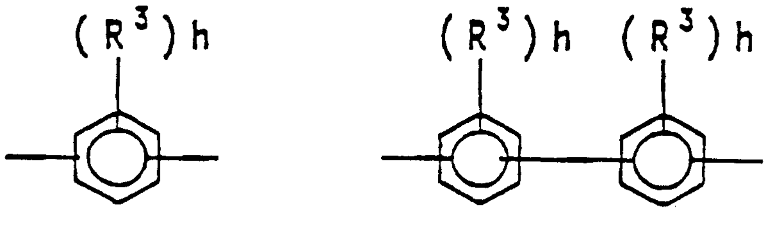

($\beta$) un radical de formule générale

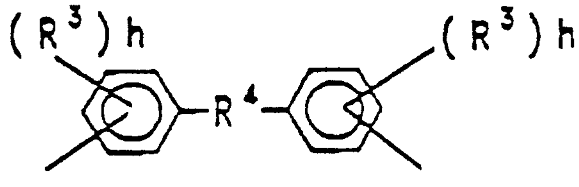

$R^3$ désignant un alkyle en $C_1$-$C_5$ ou un halogène et $R^4$ signifiant O, S, CO, SO, $SO_2$, un alkylène

avec de 1 à 9 atomes de carbone, un alkylidène avec de 1 à 6 atomes de carbone, un cycloalkylène ou un cycloalkylidène avec chacun de 4 a 9 atomes de carbone, et l'indice h étant l'un des nombres entiers 0, 1, 2, 3 ou 4,

ou

($\gamma$) un radical de formule générale

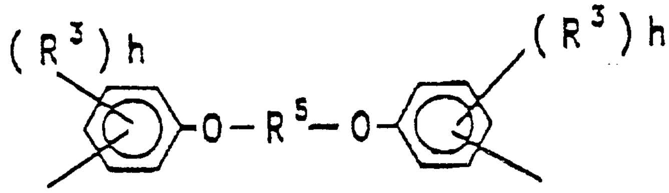

$R^5$ représentant un radical aromatique substitué ou non des formules suivantes

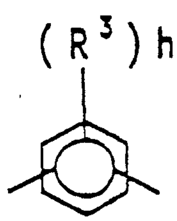

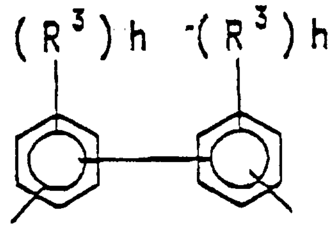

ou bien un radical bivalent de formule générale

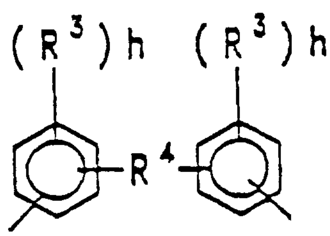

$R^3$, $R^4$ et l'indice h ayant les significations indiquées ci-dessus,

Z représente

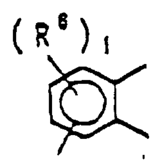

et X représente

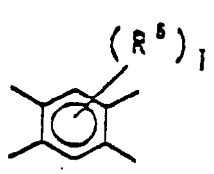

ou

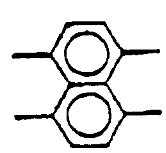

$R^6$ étant, indépendamment l'un de l'autre, un alkyle avec de 1 à 6 atomes de carbone ou bien un alcoxy avec de 1 à 6 atomes de carbone et l'indice i étant un des nombres entiers 0, 1, 2 ou 3 et l'indice j l'un des nombres entiers 0, 1 ou 2, et
le polyarylester (c) dérive d'au moins un composé dihydroxyaryle et d'au moins un des acides dicarboxyliques aromatiques ou bien le polyarylester est un polyestercarbonate, qui dérive d'au moins un composé dihydroxyaryle, d'un dérivé d'acide carboxylique et d'au moins un des acides dicarboxyliques aromatiques,
et l'indice de Staudinger pour (a) va de 0,2 à 5,0 dl/g, pour (b) de 0,1 à 3,0 dl/g et pour (c) de 0,1 à 2,0 dl/g et la fraction du composant (a) est de 60 à 95 % en poids, de (b) de 2 à 35 % en poids et de (c) de 2 à 35 % en poids, à chaque fois par rapport à la quantité totale des composants (a), (b) et (c) dans l'alliage.

2. Alliage selon la revendication 1, caractérisé en ce que la partie du composant (a) est de 75 à 95 % en poids, celle du composant (b) est de 2 à 20 % et celle du composant (c) est de 2 à 20 %.

3. Alliage selon la revendication 1, caractérisé en ce que l'indice de STAUDINGER du composant (a) est de 0,5 à 2,5 dl/g, celui du composant (b) est de 0,3 à 1,5 dl/g et celui du composant (c) est de 0,3 à 1,5 dl/g.

4. Alliage selon la revendication 3, caractérisé en ce que l'indice de STAUDINGER du composant (a) est de 0,7 à 2,0 dl/g, celui du composant (b) est de 0,3 à 1,0 dl/g et celui du composant (c) est de 0,3 à 1,0 dl/g.

5. Alliage selon la revendication 1, caractérisé en ce que la polyaryléthercétone comprend des motifs d'une ou plusieurs des formules suivantes :

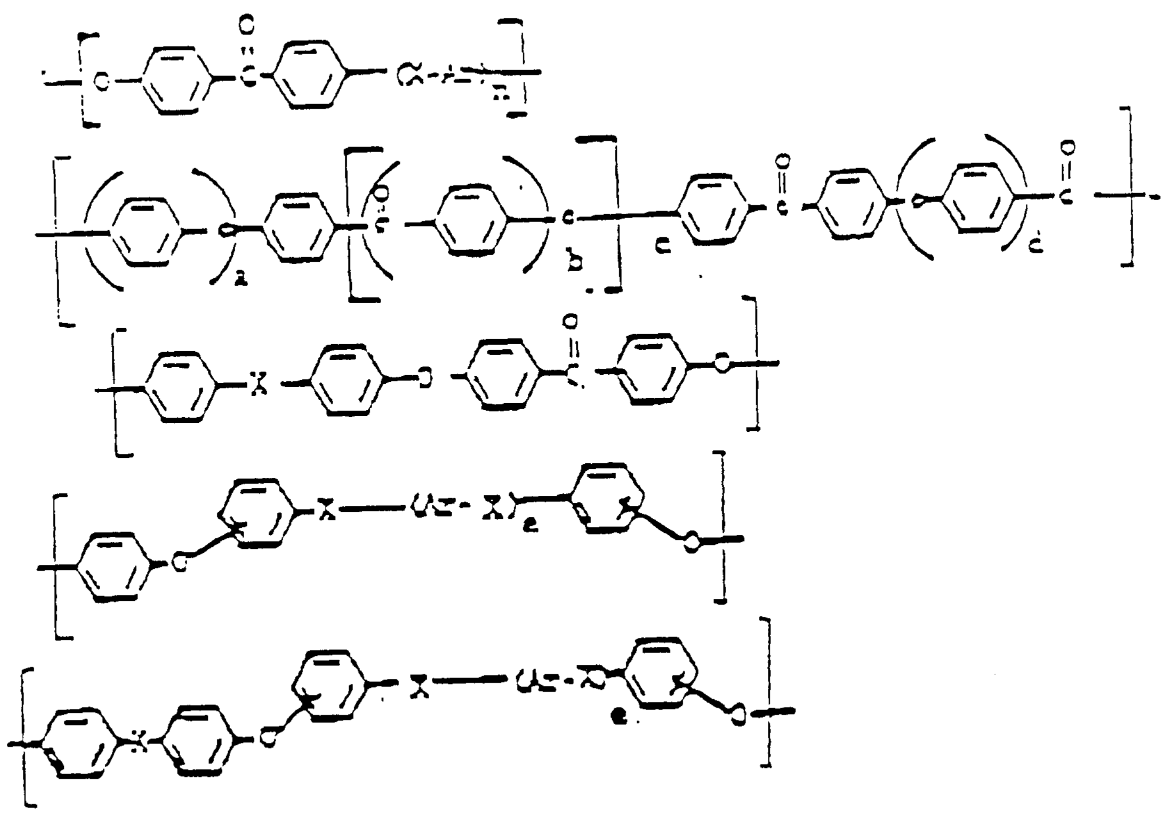

dans lesquelles Ar représente un radical aromatique divalent pris parmi les radicaux phénylène, biphénylène et naphtylène, X, indépendamment les uns des autres, représente O, CO ou une liaison directe, n vaut 0 ou est l'un des nombres entiers 1, 2 ou 3, b, c, d et e valent 0 ou 1, a est le nombre entier 1, 2, 3 ou 4 et d est de préférence nul, si b vaut 1.

6. Alliage selon la revendication 5, caractérisé en ce que la polyaryléthercétone comprend un des motifs de structures suivantes :

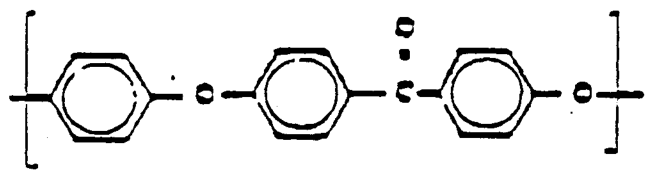

ou

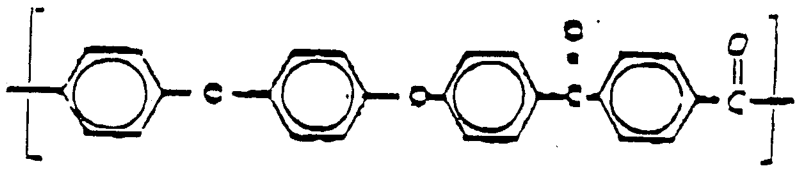

ou

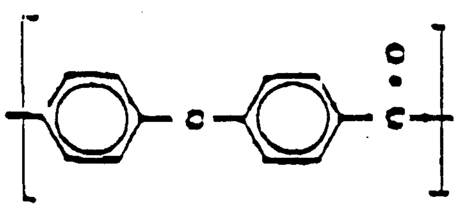

7. Alliage selon la revendication 1, caractérisé en ce que le polyimide comprend des motifs de formules suivantes :

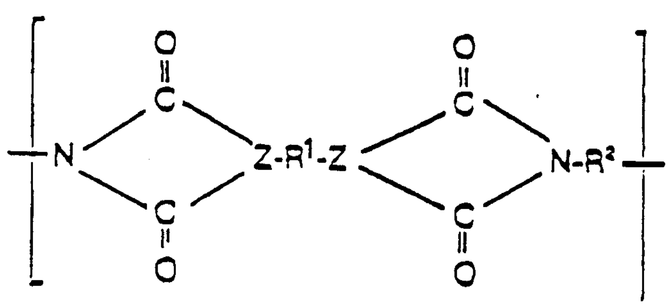

ou

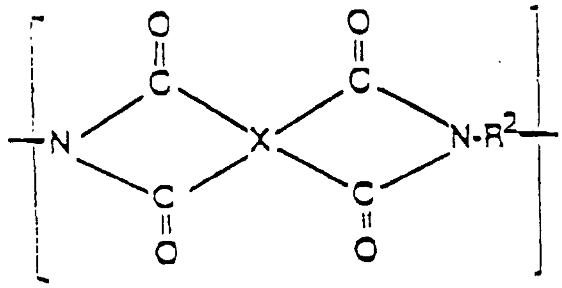

$R^1$ désignant O, S, CO, SO, $SO_2$, un alkylène avec à chaque fois de 1 à 6 atomes de carbone, $C(CH_3)_2$, $C(CF_3)_2$ ou $C(CH_3)(CF_3)$ ou une liaison directe, et $R^2$ un radical hydrocarboné bivalent pris parmi

(α) un radical substitué ou non de formules

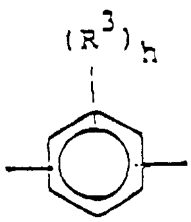

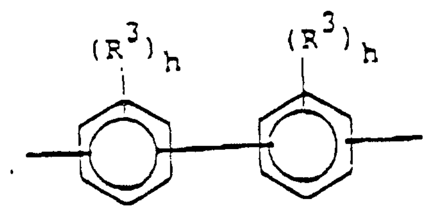

(β) un radical de formule générale

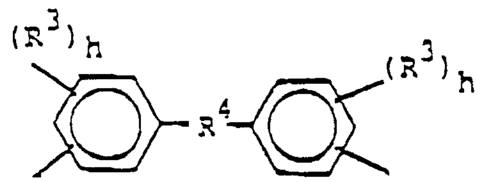

,

$R^3$ désignant un alkyle en $C_1$-$C_6$ ou un halogène, et $R^4$ signifiant O, S, CO, SO, $SO_2$, un alkylène avec de 1 à 9 atomes de carbones, un alkylidène avec de 1 à 6 atomes de carbone, un cycloalkylène ou un cycloalkylidène avec chacun de 4 à 9 atomes de carbone, et l'indice h étant l'un des nombres entiers 0, 1, 2, 3 ou 4,

ou

(γ) un radical de formule générale

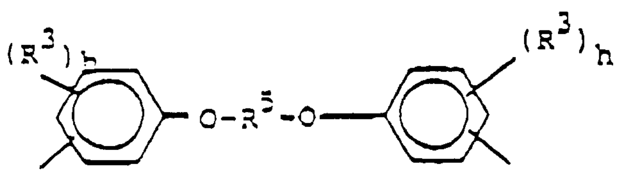

,

$R^5$ représentant un radical aromatique substitué ou non de formules suivantes

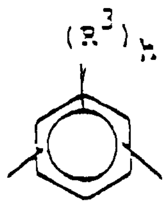

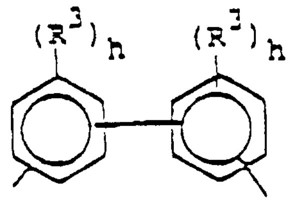

ou bien un radical bivalent de formule générale

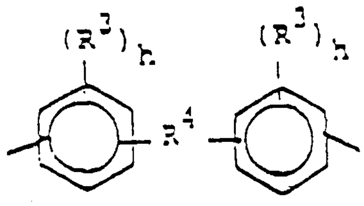 ,

$R^3$, $R^4$ et l'indice h ayant les significations indiquées ci-dessus,
"Z" représente

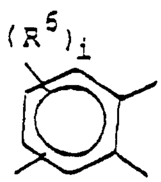

et "X" représente

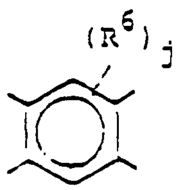 ou 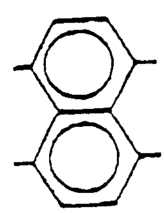

$R^6$ étant, indépendamment l'un de l'autre, un alkyle avec de 1 à 6 atomes de carbone tel que le méthyle, l'éthyle, les divers isomères des groupes propyle, butyle, pentyle et hexyle, ou bien alcoxy avec de 1 à 6 atomes de carbone, par exemple méthoxy, éthoxy ou butoxy, et l'indice i étant l'un des nombres entiers 0, 1, 2 ou 3 et l'indice j l'un des nombres entiers 0, 1 ou 2.

**8.** Alliage selon la revendication 1, caractérisé en ce que le polyimide comprend des motifs des formules suivantes :

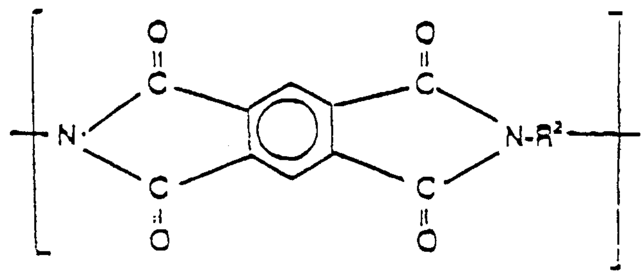

ou

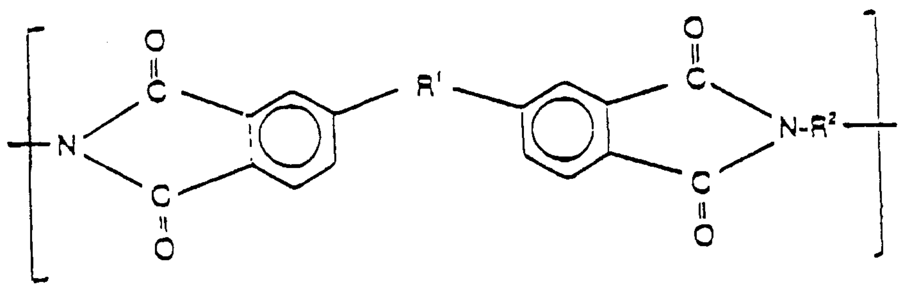

$R^1$ et $R^2$ ayant les significations ci-dessus indiquées.

**9.** Alliage selon la revendication 1, caractérisé en ce que le polyimide comprend des motifs de formules suivantes :

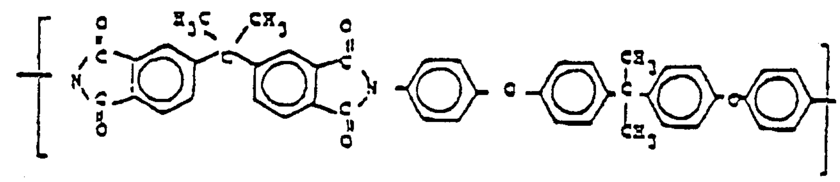

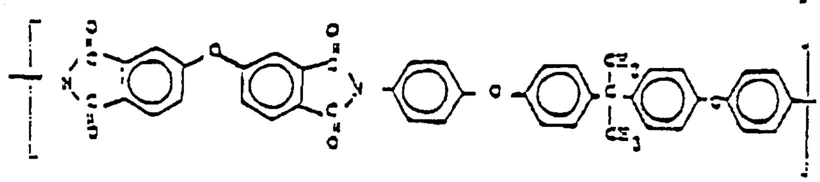

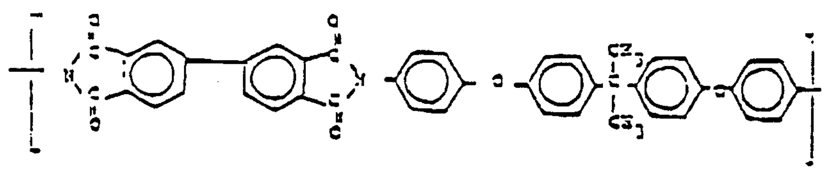

**10.** Alliage selon la revendication 1, caractérisé en ce que le polyester arylique comprend des motifs de formule suivante :

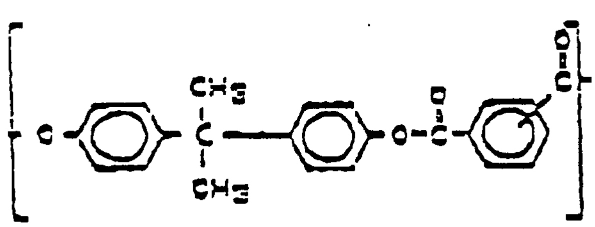

**11.** Alliage selon la revendication 1, caractérisé en ce que le dihydroxyaryle a la formule suivante :

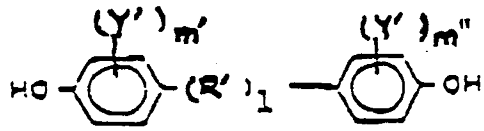

dans laquelle Y' représente un alkyle avec de 1 à 4 atomes de carbone, un cycloalkyle avec de 6 à 12 atomes de carbone ou un halogène, m' et m'' sont chacun, indépendamment l'un de l'autre, l'un des nombres entiers 0, 1, 2, 3 ou 4, R' est un alkylène ou alkylidène avec de 1 à 9 atomes de carbone et l'indice l le nombre 0 ou 1.

**12.** Alliage selon la revendication 11, caractérisé en ce que le composé dihydroxy-arylique est :

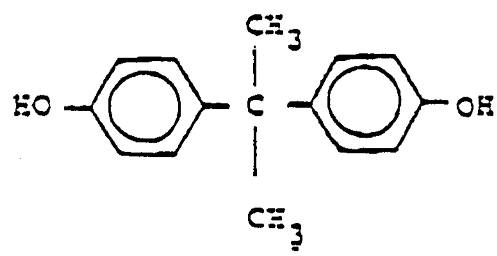

**13.** Alliage selon la revendication 1, caractérisé en ce que l'acide dicarboxylique aromatique a la formule suivante :

HOOC - R'' - COOH

dans laquelle R'' est pris parmi les groupes

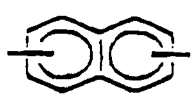

ou

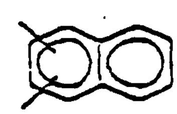

ou

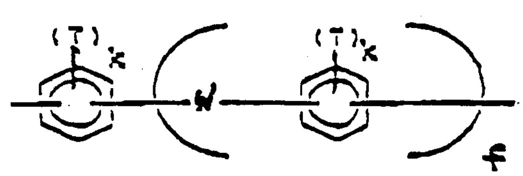

f étant le nombre 0 ou 1 et W désignant O, $SO_2$, CO, $C(CH_3)_2$, $CH_2$, S ou

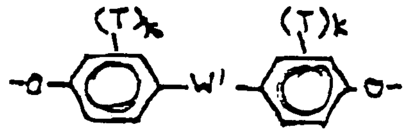

W' désignant O, $SO_2$, CO, $C(CH_3)_2$, $CH_2$ ou S et T dans les formules T un alkyle avec de 1 à 6 atomes de carbone ou un halogène et l'indice k étant l'un des nombres entiers 0, 1, 2, 3 ou 4.

**14.** Alliage selon la revendication 13, caractérisé en ce que l'acide dicarboxylique aromatique est choisi parmi l'acide isophtalique, l'acide téréphtalique et un dérivé réactif de ces acides ainsi que leurs mélanges.

**15.** Alliage selon la revendication 10, caractérisé en ce que le polyester arylique comporte des motifs récurrents de formule suivante :

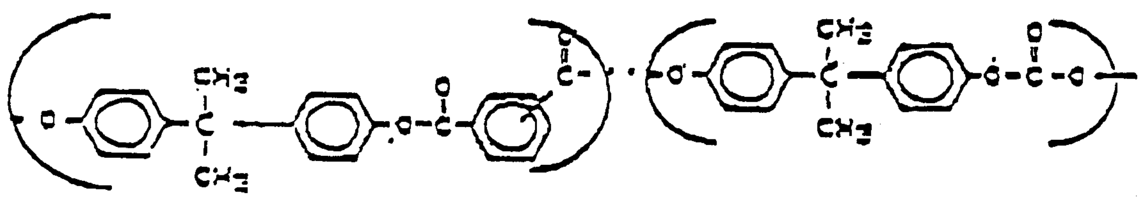

**16.** Alliage selon la revendication 1, caractérisé en ce que la polyaryléthercétone comporte des motifs de formule

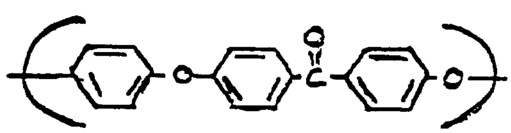

le polyimide des motifs de formule

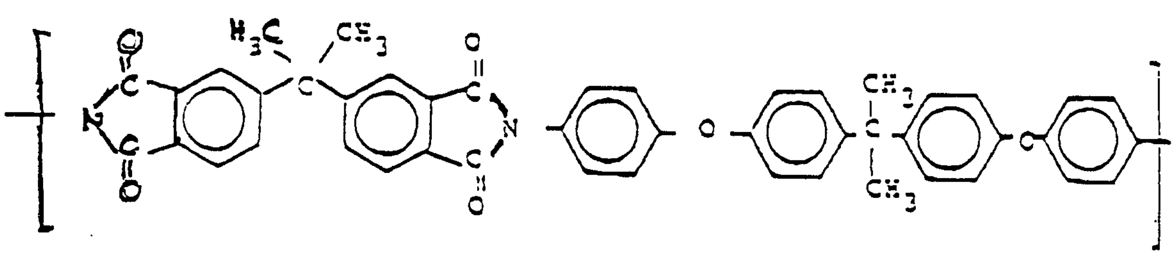

et le polyester arylique des motifs de formule

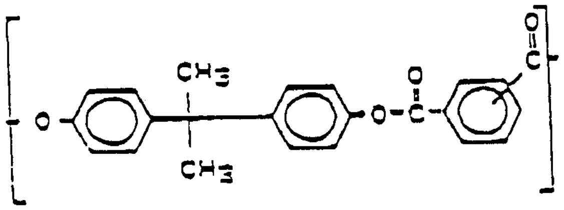

**17.** Alliage selon la revendication 1, caractérisé en ce que la polyaryléthercétone comporte des motifs de formule

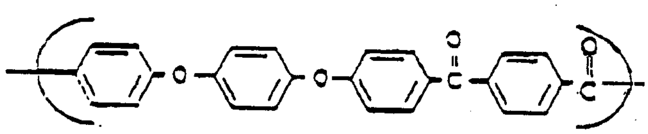

le polyimide des motifs de formule

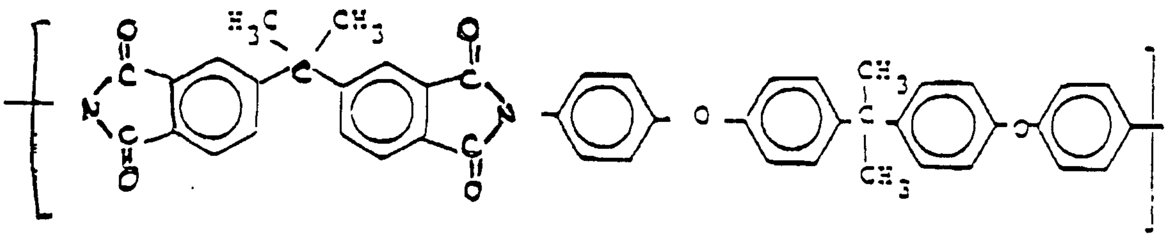

et le polyester arylique des motifs de formule

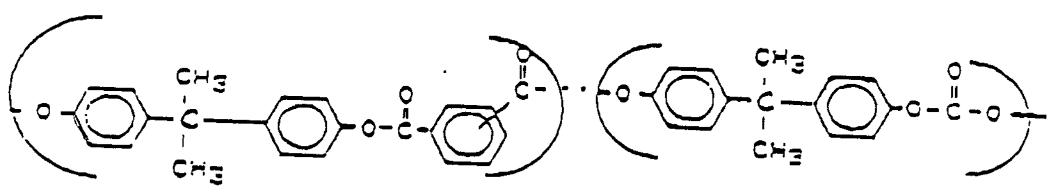

**18.** Alliage selon la revendication 1, caractérisé en ce que la polyaryléthercétone comporte des motifs de formule

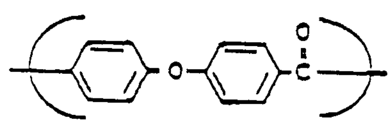

le polyimide des motifs de formule

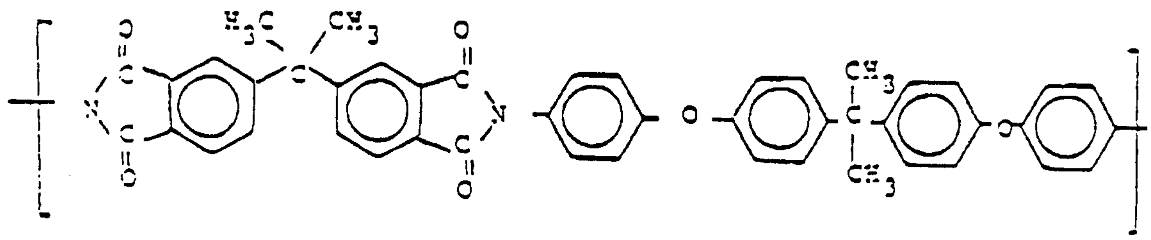

et le polyester arylique des motifs de formule

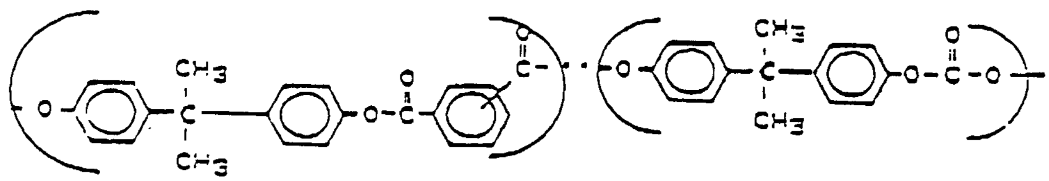

**19.** Utilisation d'un alliage selon la revendication 1 pour la préparation d'objets moulés ou comme matière de matrices de composites.